# EUROPEAN PATENT APPLICATION

(11) **EP 2 806 614 A2**
(43) Date of publication of application: **26.11.2014**
(21) Application number: 14169616.1
(22) Date of filing: 23.05.2014
(51) Int. Cl.: H04L 29/08, H04W 76/02, H04L 12/24, G06F 1/16, H04W 84/12, H04W 84/18, H04W 4/00, H04W 88/02, H04W 88/08, H04W 88/12, H04W 8/00, H04M 1/725

(54) **Apparatus and method for performing wireless docking operation in communication system supporting universal plug and play protocol**

(30) Priority: 23.05.2013 US 201361826694 P; 09.08.2013 US 201361864190 P; 16.09.2013 US 201361878417 P; 15.11.2013 US 201361904811 P
(71) Applicant: Samsung Electronics Co., Ltd, Gyeonggi-do 443-742 (KR)
(72) Inventor: Lee, Jong-Hyo, 443-742 Gyeonggi-do (KR); Srinivasa Gopalan, Karthik, 560093 Bangalore (IN); Vedula, Kiran Bharadwaj, 560093 Bangalore (IN); Kim, Jun-Hyung, 443-742 Gyeonggi-do (KR)
(74) Representative: Gover, Richard Paul

(57) **Abstract**

A method for performing a wireless docking operation in a Wireless Dockee (WD) in a communication system is provided. The method including transmitting, to a Wireless Docking Center (WDC), a get peripheral information action message requesting peripheral information for at least one peripheral of the WD; and receiving, from the WDC, a get peripheral information action response message including the peripheral information for the at least one peripheral of the WD.

## Description

### BACKGROUND OF THE INVENTION

### 1. Field of the invention

The present invention relates generally to an apparatus and method for performing a wireless docking operation in a communication system supporting a Universal Plug and Play (UPnP) protocol.

### 2. Description of the Related Art

Generally, in a communication system supporting a UPnP protocol, all types of peripherals are connected/associated to a Wireless Docking Center (WDC). There may be some wired peripherals, some BlueTooth (BT) peripherals and some Wireless-Fidelity (Wi-Fi) based peripherals such as Wi-Fi Serial Bus (WSB) mouse, a miracast sink, and the like.

An administrator will configure a group of peripherals. The WDC is Wi-Fi Peer to Peer (P2P) enabled and is configured to be a P2P Group Owner (GO). Here, the WDC is configured to be the P2P GO irrespective of whether Wi-Fi based peripherals are connected.

A Wireless Dockee (WD) discovers a WDC, and joins as a group client for a group as a GO. For example, the WD may be a wireless device such as a mobile phone.

After a P2P group is formed between a WD and a WDC, a protocol that runs between the WD and the WDC is defined as a docking pilot protocol or a docking management protocol. The protocol that runs between the WD and the WDC describes a docking protocol. The docking protocol may be defined using a plurality of protocols, and typical protocols are an Internet Protocol (IP) based docking protocol and a non-IP based docking protocol.

The IP based docking protocol may include a UPnP based docking protocol and other IP based protocol.

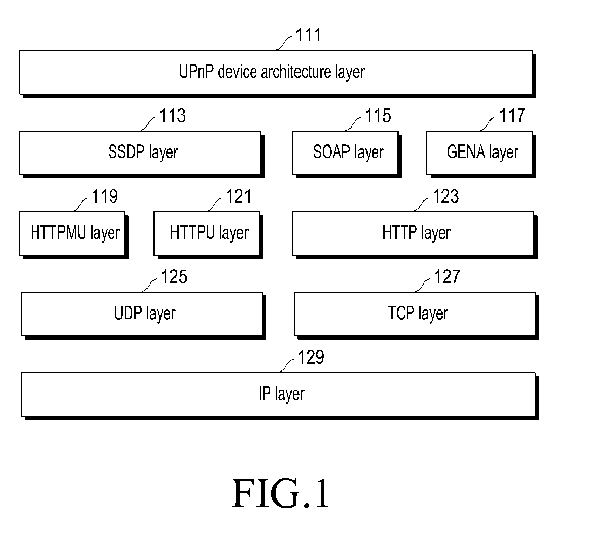

FIG. 1 schematically illustrates a typical UPnP protocol stack structure.

Referring to FIG. 1, the UPnP protocol stack includes a UPnP device architecture layer 111, a Simple Service Discovery Protocol (SSDP) layer 113, a Simple Object Access Protocol (SOAP) layer 115, a General Event Notification Architecture (GENA) layer 117, a Hyper Text Transfer Protocol Multicast over User Datagram Protocol (HTTPMU) layer 119, a HTTP over UDP (HTTPU) layer 121, an HTTP layer 123, an UDP layer 125, a Transmission Control Protocol (TCP) layer 127, and an IP layer 129.

In the UPnP protocol stack, the same messages may be exchanged through other IP based protocol or a non-IP based protocol which uses Type, Length, Value (TLV) message exchanges. A detailed description of the UPnP device architecture layer 111, the SSDP layer 113, the SOAP layer 115, the GENA layer 117, the HTTPMU layer 119, the HTTPU layer 121, the HTTP layer 123, the UDP layer 125, the TCP layer 127, and the IP layer 129 will be omitted herein.

For wireless docking, a WD and a WDC should continuously interact. Currently, there is no wireless docking protocol defined between the WD and the WDC in a communication system a UPnP protocol.

Accordingly, there is a need for a wireless docking protocol between a WD and a WDC for wireless docking in a communication system a UPnP protocol.

The above information is presented as background information only to assist with an understanding of the present invention. No determination has been made, and no assertion is made, as to whether any of the above might be applicable as prior art with regard to the present invention.

### SUMMARY

An aspect of the present invention is to address at least the above-mentioned problems and/or disadvantages and to provide at least the advantages described below.

Accordingly, an aspect of the present invention is to provide an apparatus and method for performing a wireless docking operation in a communication system supporting a UPnP protocol.

Another aspect of the present invention is to provide an apparatus and method for performing a wireless docking operation thereby getting peripheral information for at least one peripheral of a WD in a communication system supporting a UPnP protocol.

Another aspect of the present invention is to provide an apparatus and method for performing a wireless docking operation thereby getting Wireless Docking Environment (WDN) information for at least one WDN of a WD in a communication system supporting a UPnP protocol.

Another aspect of the present invention is to provide an apparatus and method for performing a wireless docking operation thereby getting Peripheral Function (PF) information for at least one peripheral of a WD which the WD will select in a communication system supporting a UPnP protocol.

Another aspect of the present invention is to provide an apparatus and method for performing a wireless docking operation thereby getting WDN information for at least one WDN of a WD which the WD will select in a communication system supporting a UPnP protocol.

Another aspect of the present invention is to provide an apparatus and method for performing a wireless docking operation thereby undocking all peripherals to which a WD is docked in a communication system supporting a UPnP protocol.

Another aspect of the present invention is to provide an apparatus and method for performing a wireless docking operation thereby undocking specific peripherals among all peripherals to which a WD is docked in a communication system supporting a UPnP protocol.

Another aspect of the present invention is to provide an apparatus and method for performing a wireless docking operation thereby knowing change for docked states for all WDs which are currently docked to a WDC in a communication system supporting a UPnP protocol.

Another aspect of the present invention is to provide an apparatus and method for performing a wireless docking operation thereby receiving a list for peripherals which are currently docked to a WDC in a communication system supporting a UPnP protocol.

Another aspect of the present invention is to provide an apparatus and method for performing a wireless docking operation based on a Near Field Communication (NFC) scheme in a communication system supporting a UPnP protocol.

In accordance with an aspect of the present invention, there is provided a method for performing a wireless docking operation in WD in a communication system, the method comprising: transmitting, to WDC, a get peripheral information action message requesting peripheral information for at least one peripheral of the WD; and receiving, from the WDC, a get peripheral information action response message including the peripheral information for the at least one peripheral of the WD.

In accordance with an aspect of the present invention, there is provided a method for performing a wireless docking operation in a WDC in a communication system, the method comprising: receiving, from a WD, a get peripheral information action message requesting peripheral information for at least one peripheral of the WD; and transmitting, to the WD, a get peripheral information action response message including the peripheral information for the at least one peripheral of the WD.

In accordance with an aspect of the present invention, there is provided a method for performing a wireless docking operation in a WD in a communication system, the method comprising: transmitting, to a WDC, a get WDN information action message requesting WDN information for at least one WDN of the WD; and receiving, from the WDC, a get WDN information action response message including the WDN information for the at least one WDN of the WD.

In accordance with an aspect of the present invention, there is provided a method for performing a wireless docking operation in a WDC in a communication system, the method comprising: receiving, from a WD, a get WDN information action message requesting WDN information for at least one WDN of the WD; and transmitting, to the WD, a get WDN information action response message including the WDN information for the at least one WDN of the WD.

In accordance with an aspect of the present invention, there is provided a method for performing a wireless docking operation in a WD in a communication system, the method comprising: transmitting, to a WDC, a docking action message requesting PF information for at least one peripheral of the WD which the WD will select; and receiving, from the WDC, a docking action response message including the PF information for the at least one peripheral of the WD.

In accordance with an aspect of the present invention, there is provided a method for performing a wireless docking operation in a WDC in a communication system, the method comprising: receiving, from a WD, a docking action message requesting PF information for at least one peripheral of the WD, which the WD will select; and transmitting, to the WD, a docking action response message including the PF information for the at least one peripheral of the WD.

In accordance with an aspect of the present invention, there is provided a method for performing a wireless docking operation in a WD in a communication system, the method comprising: transmitting, to a WDC, a docking action message requesting WDN information for at least one WDN of the WD, which the WD will select; and receiving, from the WDC, a docking action response message including the WDN information for the at least one WDN of the WD.

In accordance with an aspect of the present invention, there is provided a method for performing a wireless docking operation in a WDC in a communication system, the method comprising: receiving, from a WD, a docking action message requesting WDN information for at least one WDN of the WD, which the WD will select; and transmitting, to the WD, a docking action response message including the WDN information for the at least one WDN of the WD to the WD.

In accordance with an aspect of the present invention, there is provided a method for performing a wireless docking operation in a WD in a communication system, the method comprising: transmitting, to a WDC, an undock action message requesting to undock the WD from all peripherals to which the WD is docked; and receiving, from the WDC, an undock action response message indicating that the WD has been undocked from the peripherals.

In accordance with an aspect of the present invention, there is provided a method for performing a wireless docking operation in a WDC in a communication system, the method comprising: receiving, from a WD, an undock action message requesting to undock the WD from all peripherals to which the WD is docked; undocking the WD in response to the undock action message from the WD; and transmitting, to the WD an undock action response message indicating that the WD has been undocked from the peripherals.

In accordance with an aspect of the present invention, there is provided a method for performing a wireless docking operation in a WD in a communication system, the method comprising: transmitting, to a WDC, an undock action message requesting to undock the WD from specific peripherals among peripherals to which the WD is docked; and receiving, from the WDC, an undock action response message indicating that the WD has been undocked from the specific peripherals.

In accordance with an aspect of the present invention, there is provided a method for performing a wireless docking operation in a WDC in a communication system, the method comprising: receiving, from the WD, an undock action message requesting to undock specific peripherals among peripherals to which the WD is docked from the WD; undocking the specific peripherals from the WD in response to the undock action message; and transmitting, to the WD, an undock action response message indicating that the specific peripherals have been undocked from the WD.

In accordance with an aspect of the present invention, there is provided a method for performing a wireless docking operation in a WD in a communication system, the method comprising: receiving, a WDC, a docking state change parameter which informs of a change for docked states for all WDs that are docked to the WDC.

In accordance with an aspect of the present invention, there is provided a method for performing a wireless docking operation in a WDC in a communication system, the method comprising: transmitting, to a WD, a docking state change parameter which informs of a change for docked states for all of WDs which are docked to the WDC.

In accordance with an aspect of the present invention, there is provided a method for performing a wireless docking operation in a WD in a communication system, the method comprising: receiving, a WDC, a list of peripherals which are currently docked to the WDC.

In accordance with an aspect of the present invention, there is provided a method for performing a wireless docking operation in a WDC in a communication system, the method comprising: transmitting, to a WD, a list of peripherals which are currently docked to the WDC.

In accordance with an aspect of the present invention, there is provided a method for performing a wireless docking operation in a WD in a communication system, the method comprising: connecting to a WDC using a NFC scheme; triggering an NFC-Peer to Peer (P2P) connection; and performing an auto docking process with the WDC, after triggering the NFC-P2P connection.

In accordance with an aspect of the present invention, there is provided a method for performing a wireless docking operation in a WDC in a communication system, the method comprising: connecting to a WD using a NFC scheme; triggering a NFC-Peer to Peer (P2P) connection; and performing an auto docking process with the WD, after triggering the NFC-P2P connection.

In accordance with another aspect of the present invention, there is provided a WD in a communication system, the WD comprising: a transmitter configured to transmit, to a WDC, a get peripheral information action message requesting peripheral information for at least one peripheral of the WD; and a receiver configured to receive, from the WDC, a get peripheral information action response message including the peripheral information for the at least one peripheral of the WD.

In accordance with an aspect of the present invention, there is provided a WDC in a communication system, the WDC comprising: a receiver configured to receive, from a WD, a get peripheral information action message requesting peripheral information for at least one peripheral of the WD; and a transmitter configured to transmit, to the WD, a get peripheral information action response message including the peripheral information for the at least one peripheral of the WD.

In accordance with an aspect of the present invention, there is provided a WD in a communication system, the WD comprising: a transmitter configured to transmit, to a WDC, a get WDN information action message requesting WDN information for at least one WDN of the WD; and a receiver configured to receive, from the WDC, a get WDN information action response message including the WDN information for the at least one WDN of the WD.

In accordance with an aspect of the present invention, there is provided a WDC in a communication system, the WDC comprising: a receiver configured to receive, from a WD, a get WDN information action message requesting WDN information for at least one WDN of the WD; and a transmitter configured to transmit, to the WD, a get WDN information action response message including the WDN information for the at least one WDN of the WD.

In accordance with an aspect of the present invention, there is provided a WD in a communication system, the WD comprising: a transmitter configured to transmit, to a WDC, a docking action message requesting PF information for at least one peripheral of the WD, which the WD will select; and a receiver configured to receive, from the WDC, a docking action response message including the PF information for the at least one peripheral of the WD.

In accordance with an aspect of the present invention, there is provided a WDC in a communication system, the WDC comprising: a receiver configured to receive, from a WD, a docking action message requesting PF information for at least one peripheral of the WD, which the WD will select; and a transmitter configured to transmit, to the WD, a docking action response message including the PF information for the at least one peripheral of the WD.

In accordance with an aspect of the present invention, there is provided a WD in a communication system, the WD comprising: a transmitter configured to transmit, to a WDC, a docking action message requesting WDN information for at least one WDN of the WD, which the WD will select; and a receiver configured to receive, from the WDC, a docking action response message including the WDN information for the at least one WDN of the WD.

In accordance with an aspect of the present invention, there is provided a WDC in a communication system, the WDC comprising: a receiver configured to receive, from a WD, a docking action message requesting WDN information for at least one WDN of the WD, which the WD will select; and a transmitter configured to transmit, to the WD, a docking action response message including the WDN information for the at least one WDN of the WD.

In accordance with an aspect of the present invention, there is provided a WD in a communication system, the WD comprising: a transmitter configured to transmit, to a WDC, an undock action message requesting to undock the WD from all peripherals to which the WD is docked; and a receiver configured to receive, from the WDC, an undock action response message indicating that the WD has been undocked from the peripherals.

In accordance with an aspect of the present invention, there is provided a WDC in a communication system, the WDC comprising: a receiver configured to receive, from a WD, an undock action message requesting to undock the WD from all peripherals to which the WD is docked; a controller configured to undock the WD in response to the undock action message; and a transmitter configured to transmit, to the WD, an undock action response message indicating that the WD has been undocked.

In accordance with an aspect of the present invention, there is provided a WD in a communication system, the WD comprising: a transmitter configured to transmit, to a WDC, an undock action message requesting to undock the WD from specific peripherals among peripherals to which the WD; and a receiver configured to receive, from the WDC, an undock action response message indicating that the WD has been undocked from the specific peripherals.

In accordance with an aspect of the present invention, there is provided a WDC in a communication system, the WDC comprising: a receiver configured to receive, from a WD, an undock action message requesting to undock specific peripherals among peripherals to which the WD is docked from the WD; a controller configured to undock the specific peripherals from the WD in response to the undock action message; and a transmitter configured to transmit, to the WD, an undock action response message indicating that the specific peripherals have been undocked from the WD.

In accordance with an aspect of the present invention, there is provided a WD in a communication system, the WD comprising: a receiver configured to receive, from a WDC, a docking state change parameter which informs of a change for docked states for all WDs that are docked to the WDC.

In accordance with an aspect of the present invention, there is provided a WDC in a communication system, the WDC comprising: a transmitter configured to transmit, to a WD, a docking state change parameter which informs of a change for docked states for all WDs which are docked to the WDC.

In accordance with an aspect of the present invention, there is provided a WD in a communication system, the WD comprising: a receiver configured to receive, from a WDC, a list of peripherals which are currently docked to the WDC.

In accordance with an aspect of the present invention, there is provided a WDC in a communication system, the WDC comprising: a transmitter configured to transmit, to a WD, a list of peripherals which are currently docked to the WDC.

In accordance with an aspect of the present invention, there is provided a WD in a communication system, the WD comprising: a controller configured to connect to a WDC using a NFC scheme, trigger an NFC-Peer to Peer (P2P) connection, and perform an auto docking process with the WDC, after triggering the NFC-P2P connection.

In accordance with an aspect of the present invention, there is provided a WDC in a communication system, the WDC comprising: a controller configured to connect to a WD using an NFC scheme, trigger a NFC-Peer to Peer (P2P) connection, and perform an auto docking process with the WD, after triggering the NFC-P2P connection.

Other aspects, advantages, and salient features of the invention will become apparent to those skilled in the art from the following detailed description, which, taken in conjunction with the annexed drawings, discloses embodiments of the invention.

### BRIEF DESCRIPTION OF THE DRAWINGS

The above and other aspects, features and advantages of certain embodiments of the present invention will be more apparent from the following description taken in conjunction with the accompanying drawings, in which:
FIG. 1 is a diagram illustrating a typical UPnP protocol stack structure;
FIG. 2 is a diagram illustrating a structure of a communication system supporting a UPnP protocol, according to an embodiment of the present invention;
FIG. 3 illustrates device description code in a communication system supporting a UPnP protocol, according to an embodiment of the present invention;
FIG. 4 illustrates service description code in a communication system supporting a UPnP protocol, according to an embodiment of the present invention;
FIG. 5 is a signal processing diagram illustrating a two-stage user interaction process which uses a pilot protocol in a communication system supporting a UPnP protocol, according to an embodiment of the present invention;
FIG. 6 is a signal processing diagram illustrating a single stage user interaction process which uses a pilot protocol in a communication system supporting a UPnP protocol, according to an embodiment of the present invention;
FIG. 7 is a signal processing diagram illustrating a re-dock and undock procedure in a communication system supporting a UPnP protocol, according to an embodiment of the present invention;
FIG. 8 is a signal processing diagram illustrating an auto WDN creation procedure based on capability matching which is performed in a WD in a communication system supporting a UPnP protocol, according to an embodiment of the present invention;
FIG. 9 is a signal processing diagram illustrating an auto WDN creation procedure based on capability matching which is performed in a WDC in a communication system supporting a UPnP protocol, according to an embodiment of the present invention;
FIGS. 10A to 10B are signal processing diagrams illustrating an auto WDN creation procedure in which a peripheral availability is used in order to create a WDN in a communication system supporting a UPnP protocol, according to an embodiment of the present invention;
FIG. 11 is a diagram illustrating a structure of a WD and a docking service for auto docking in a communication system supporting a UPnP protocol, according to an embodiment of the present invention;
FIG. 12 is a signal processing diagram illustrating an auto docking connection procedure which is implemented based on a service naming based approach scheme in a communication system supporting a UPnP, according to an embodiment of the present invention;
FIG. 13 is a signal processing diagram illustrating an operating procedure of each Application Service Platform (ASP) in a case that an auto docking connection procedure which is implemented based on a service naming based approach scheme is performed in a communication system supporting a UPnP, according to an embodiment of the present invention;
FIG. 14 is a signal processing diagram illustrating an operating procedure of each ASP in a case that an auto docking connection procedure which is implemented based on a service discovery based approach scheme is performed in a communication system supporting a UPnP, according to an embodiment of the present invention;
FIG. 15 is a signal processing diagram illustrating an auto docking connection procedure which is implemented based on a service discovery based approach scheme in a communication system supporting a UPnP, according to an embodiment of the present invention;
FIG. 16 is a signal processing diagram illustrating an operating procedure of each ASP in a case that an auto docking connection procedure which is implemented based on a WDC initiated approach scheme is performed in a communication system supporting aUPnP, according to an embodiment of the present invention;
FIG. 17 is a signal processing diagram illustrating an operating procedure of each ASP in a case that an auto docking connection procedure which is implemented based on a WD initiated approach scheme is performed in a communication system supporting a UPnP, according to an embodiment of the present invention;
FIG. 18 is a signal processing diagram illustrating an operating procedure of each ASP in a case that an auto docking connection procedure which is implemented based on a WDC initiated approach scheme which uses a fixed connection is performed in a communication system supporting a UPnP, according to an embodiment of the present invention;
FIG. 19 is a signal processing diagram illustrating an operating procedure of each ASP in a case that an auto docking connection procedure which is implemented based on an NFC scheme is performed in a communication system supporting a UPnP, according to an embodiment of the present invention;
FIG. 20 is a signal processing diagram illustrating an operating procedure of each ASP in a case that an auto docking connection procedure which is implemented based on an NFC scheme without an auto docking context is performed in a communication system supporting a UPnP, according to an embodiment of the present invention;
FIG. 21 is a diagram illustrating an internal structure of a WD in a communication system supporting a UPnP protocol, according to an embodiment of the present invention;
FIG. 22 is a diagram illustrating an internal structure of a WDC in a communication system supporting a UPnP protocol, according to an embodiment of the present invention; and
FIG. 23 is a diagram illustrating an internal structure of a peripheral in a communication system supporting a UPnP protocol, according to an embodiment of the present invention.

Throughout the drawings, it should be noted that like reference numbers are used to depict the same or similar elements, features, and structures.

### DETAILED DESCRIPTION OF THE EMBODIMENTS OF THE PRESENT INVENTION

The following description with reference to the accompanying drawings is provided to assist in a comprehensive understanding of various embodiments of the present invention as defined by the claims and their equivalents. It includes various specific details to assist in that understanding but these are to be regarded as merely examples. Accordingly, those of ordinary skill in the art will recognize that various changes and modifications of the various embodiments described herein can be made without departing from the scope and spirit of the present invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present invention. Accordingly, it should be apparent to those skilled in the art that the following description of various embodiments of the present invention is provided for illustration purpose only and not for the purpose of limiting the present invention as defined by the appended claims and their equivalents.

Although ordinal numbers such as "first," "second," and so forth will be used to describe various components, those components are not limited herein. The terms are used only for distinguishing one component from another component. For example, a first component may be referred to as a second component and likewise, a second component may also be referred to as a first component, without departing from the teaching of the inventive concept. The term "and/or" used herein includes any and all combinations of one or more of the associated listed items.

The terminology used herein is for the purpose of describing various embodiments only and is not intended to be limiting. As used herein, the singular forms are intended to include the plural forms as well, unless the context clearly indicates otherwise. It will be further understood that the terms "comprises" and/or "has," when used in this specification, specify the presence of a stated feature, number, step, operation, component, element, or combination thereof, but do not preclude the presence or addition of one or more other features, numbers, steps, operations, components, elements, or combinations thereof.

The terms used herein, including technical and scientific terms, have the same meanings as terms that are generally understood by those skilled in the art, as long as the terms are not differently defined. It should be understood that terms defined in a generally-used dictionary have meanings coinciding with those of terms in the related technology.

An embodiment according to the present invention provides an apparatus and method for performing a wireless docking operation in a communication system supporting a UPnP protocol.

An embodiment according to the present invention provides an apparatus and method for performing a wireless docking operation thereby getting peripheral information for at least one peripheral of a Wireless Dockee (WD) in a communication system supporting a UPnP protocol.

An embodiment according to the present invention provides an apparatus and method for performing a wireless docking operation thereby getting WDN information for at least one WDN of a WD in a communication system supporting aUPnP protocol.

An embodiment according to the present invention provides an apparatus and method for performing a wireless docking operation thereby getting Peripheral Function (PF) information for at least one peripheral of a WD which the WD will select in a communication system supporting a UPnP protocol.

An embodiment according to the present inventionprovides an apparatus and method for performing a wireless docking operation thereby getting WDN information for at least one WDN of a WD which the WD will select in a communication system supporting a UPnP protocol.

An embodiment according to the present invention provides an apparatus and method for performing a wireless docking operation thereby undocking all peripherals to which a WD is docked in a communication system supporting a UPnP protocol.

An embodiment according to the present inventionprovides an apparatus and method for performing a wireless docking operation thereby undocking specific peripherals among all peripherals to which a WD is docked in a communication system supporting a UPnP protocol.

An embodiment according to the present invention provides an apparatus and method for performing a wireless docking operation thereby knowing change for docked states for all WDs which are currently docked to a WDC in a communication system supporting a UPnP protocol.

An embodiment according to the present invention provides an apparatus and method for performing a wireless docking operation thereby receiving a list for peripherals which are currently docked to a WDC in a communication system supporting a UPnP protocol.

An embodiment according to the present invention provides an apparatus and method for performing a wireless docking operation based on a NFC scheme in a communication system supporting a UPnP protocol.

A method and apparatus proposed in various embodiments of the present inventionmay be applied to various communication systems such as LTE system, an LTE-Advanced (LTE-A) system, a High Speed Downlink Packet Access (HSDPA) mobile communication system, a High Speed Uplink Packet Access (HSUPA) mobile communication system, a High Rate Packet Data (HRPD) mobile communication system proposed in a 3^{rd} Generation Project Partnership 2 (3GPP2), a Wideband Code Division Multiple Access (WCDMA) mobile communication system proposed in the 3GPP2, a Code Division Multiple Access (CDMA) mobile communication system proposed in the 3GPP2, an Institute of Electrical and Electronics Engineers (IEEE) mobile communication system, an Evolved Packet System (EPS), a Mobile Internet Protocol (Mobile IP) system, and/or the like.

An apparatus and method for performing a wireless docking operation according to an embodiment of the present invention are implemented, and a communication system supporting a UPnP protocol may be advantageous for defining a wireless docking protocol between a WD and a WDC since the UPnP has all required frameworks which defines actions, state variables, and how to transmit actions such as SOAP messages and events GENA notifications.

In an embodiment according to the present invention, the following specific details will be described;
1) various types of dock requests, i.e., various types of dock requests with an individual peripheral, peripherals, a group of peripherals, and the like;
2) actions that may be invoked for getting security keys, operating channel information, detailed peripheral information, and the like;
3) operating channel information including:
   a. A WD requests a WDC to transmit an operating channel which may be used for establishing a docking session, and any other session with a different topology; and
   b. The WDC maintains a list of operating channels that are usable at any timing point and informs the WD to operate in a specific channel; and
4) state variables for informing the WD about changes in docking states.

A detailed description of an embodiment according to the present invention will now be described.

After a P2P group is formed between a WD and a WDC, a UPnP stack is invoked on all devices. The WDC will operate like a UPnP device, and the WD will operate like a UPnP Control Point (CP). The WDC will automatically start advertising a UPnP "Managed WDC device" of the WDC and services of the WDC (a Configuration Management Service (CMS) and a docking service). The Managed WDC device may include a Basic Management Service (BMS) and Software Management Services (SMSs) which are defined by a UPnP Device Management (DM).

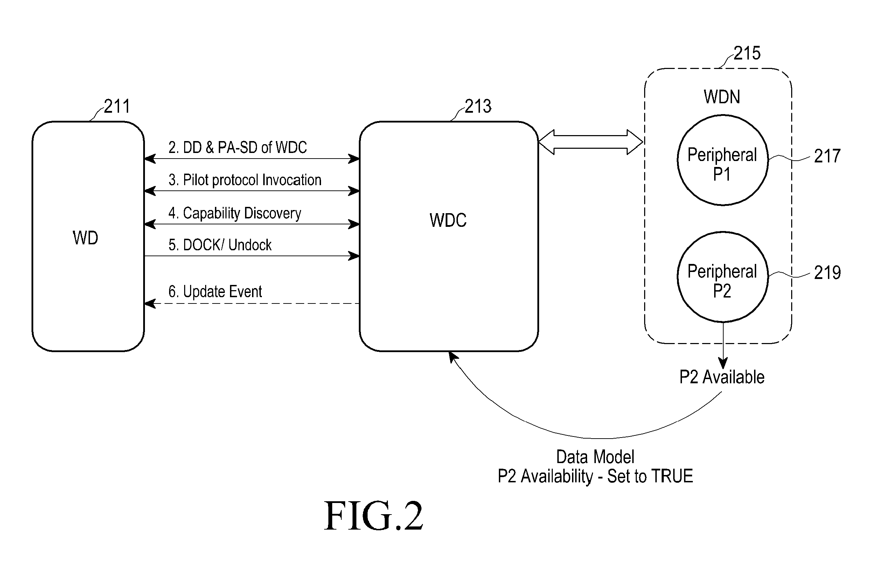

FIG. 2 is a diagram illustrating a structure of a communication system supporting a UPnP protocol according to an embodiment of the present invention.

Referring to FIG. 2, the structure of the communication system is a high level structure.

The communication system includes a WD 211, a WDC 213, and a WDN 215. The WDN 215 includes a plurality of peripherals, e.g., a peripheral P1 217 and a peripheral P2 219.

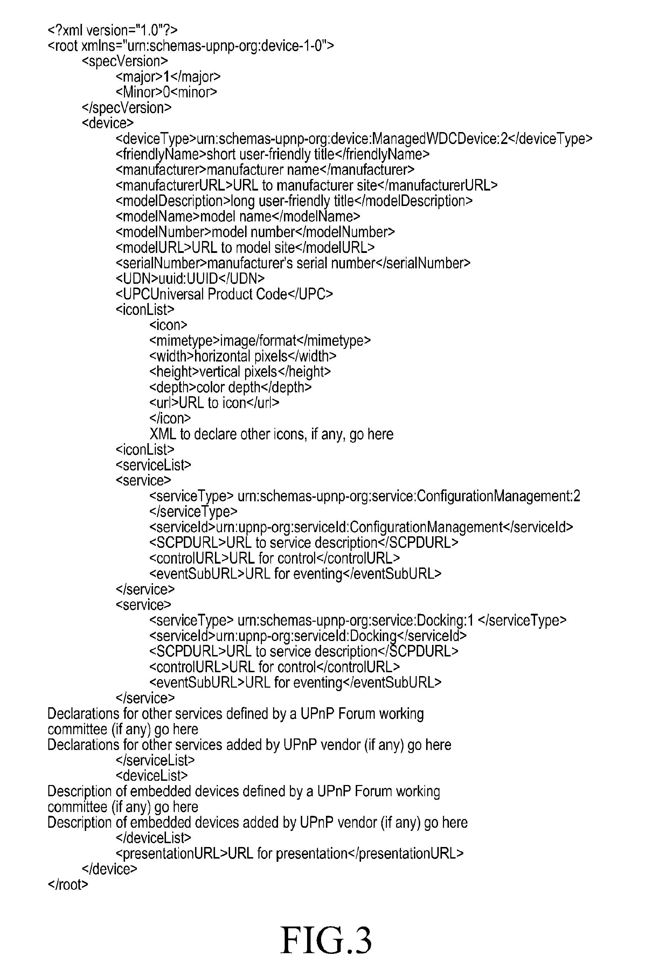

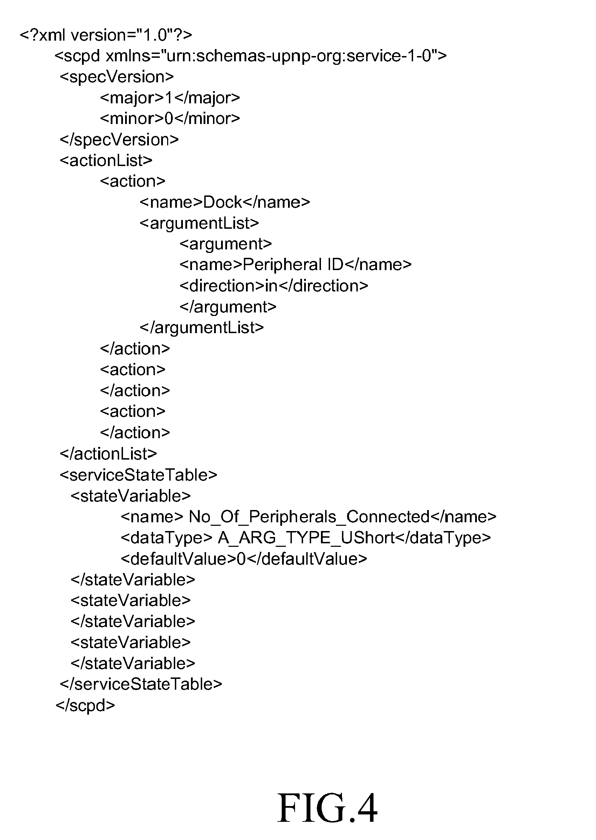

The high level structure of the communication system supporting the UPnP protocol will be described with reference to FIGS. 3 and 4.

FIG. 3 illustrates device description code in a communication system supporting a UPnP protocol according to an embodiment of the present invention.

Referring to FIG. 3, the device description is implemented as a form of an eXtensible Markup Language (XML) and defines various parameters for supporting the UPnP protocol. In FIG. 3, the device description is implemented as the form of the XML, however, it will be understood by those of ordinary skill in the art that the device description may be implemented as other forms.

FIG. 4 illustrates service description code in a communication system supporting a UPnP protocol according to an embodiment of the present invention.

Referring to FIG. 4, the service description is a CMS service description, the service description is implemented as a form of an XML and defines various parameters for supporting the UPnP protocol. As defined in the service description, it will be understood that a WDC provides only a limited CMS access for a WD. In FIG. 4, the service description is implemented as the form of the XML, however, it will be understood by those of ordinary skill in the art that the service description may be implemented as other form.

A service description in a communication system supporting a UPnP protocol according to an embodiment of the present invention has been described with reference to FIG. 4, and a peripheral docking procedure in a communication system supporting a UPnP protocol according to an embodiment of the present invention will now be described.

After a WDC advertises services of the WDC, a WD will perform a UPnP based L3 device discovery process and a service discovery process. After performing the UPnP based L3 device discovery process and the service discovery process, the WD automatically performs an event subscription process for a docking service and a CMS service.

After an L3 discovery i.e. a UPnP device discovery and service discovery have been completed, a WD will be in a position to invoke actions on the WDC. The first action that the WD may invoke on the WDC is a "Dock UPnP action". The Dock UPnP action may include peripheral IDs as an input argument. A procedure of performing a Dock UPnP action including the peripheral IDs is a Peripheral Function (PF) selection procedure, and the PF selection procedure will be described below.

The PF selection procedure denotes a procedure that the WD gets information on a sub-set as all of PFs which the WDC advertises and which are connected to the WDC or a part of all of the PFs.

A message which is used for performing the peripheral docking procedure may be expressed asDock UPnP action (peripheral IDs).

Here, the Dock UPnP action (peripheral IDs) message is a message which requests PF information corresponding to peripheral IDs.

If the PF information request according to the Dock UPnP action message is successful, the WDC transmits PF information corresponding to the Dock UPnP action message which is received from the WD. If the Dock UPnP action message which the WD transmits is a Dock UPnP action (peripheral IDs) message, the WDC includes PF information corresponding to the peripheral IDs included in the Dock UPnP action message into a Dock UPnP action response (peripheral IDs) message to transmit the Dock UPnP action response (peripheral IDs) message to the WD.

Accordingly, a related WD may access peripherals which are selected corresponding to peripheral IDs based on PF information included in a Dock UPnP action response (peripheral IDs) message.

A peripheral docking procedure in a communication system supporting a UPnP protocol according to an embodiment of the present invention has been described above, and a WDN docking procedure in a communication system supporting a UPnP protocol according to an embodiment of the present invention will be described below.

A Dock UPnP action may include WDN IDs as well as peripheral IDs as an input argument. A procedure of performing the Dock UPnP action including the WDN IDs is a WDN docking procedure, and the WDN docking procedure will be described below.

The WDN docking procedure denotes a procedure that the WD gets information on a sub-set as all of WDNs which the WDC advertises and which are connected to the WDC or a part of all of the WDNs.

A message which is used for performing the WDN docking procedure may be expressed asDock UPnP action (WDN IDs).

Here, the Dock UPnP action (WDN IDs) message is a message which requests WDN information corresponding to WDN IDs.

If the WDN information request according to the Dock UPnP action message is successful, the WDC transmits WDN information corresponding to the Dock UPnP action message which is received from the WD. If the Dock UPnP action message which the WD transmits is a Dock UPnP action (WDN IDs) message, the WDC includes WDN information corresponding to the WDN IDs included in the Dock UPnP action message into a Dock UPnP action response (WDN IDs) message to transmit the Dock UPnP action response (WDN IDs) message to the WD.

So, a related WD may access WDNs which are selected corresponding to WDN IDs based on WDN information included in a Dock UPnP action response (WDN IDs) message.

A WDN docking procedure in a communication system supporting a UPnP protocol according to an embodiment of the present inventionhas been described above, and a security key get procedure in a communication system supporting a UPnP protocol according to an embodiment of the present invention will be described below.

Firstly, a Dock UPnP action response message may include a security key as well as PF information, and the security key may be used for a security during a docking session. Further, the Dock UPnP action response message may include a Dock request ID, and information on a P2P group operating channel.

Meanwhile, if the PF information request according to the Dock UPnP action message fails, the WDC may not transmit the Dock UPnP action response message, so the WD will not access the peripherals.

If the Dock UPnP action response message does not include a security key, the WD may get a security key through a getKey UPnP action as an explicit UPnP action, and transmits a getKey UPnP action message to the WDC in order to get the security key. The WD may get an ID which belongs to a group of peripherals or a group of peripheral IDs or a single peripheral ID through the getKey UPnP action.

After receiving the getKey UPnP action message from the WD, the WDC determines whether the WD, which requests the security key, is already docked to the peripherals which request the security key before transmitting the security key in response to the getKey UPnP action message. The getKey UPnP action message may be implemented with one of the following two types:
(1) getKey UPnP action (WDN ID); and
(2) getKey UPnP action (peripheral ID or peripheral IDs).

The getKey UPnP action (WDN ID) message is a message which requests a security key which may be used for a security during a docking session related to a WDN corresponding to a WDN ID, and the getKey UPnP action (peripheral ID or peripheral IDs) message is a message which requests a security key which may be used for a security during a docking session related to a peripheral corresponding to a peripheral ID or peripherals corresponding to peripheral IDs.

A security key get procedure in a communication system supporting a UPnP protocol according to an embodiment of the present invention has been described above, and an operating channel information get procedure in a communication system supporting a UPnP protocol according to an embodiment of the present invention will now be described.

Depending on the number of peripherals and a type of peripherals selected by the WD during a Dock request, the WDC selects an operating channel to operate a P2P group and proposes the selected operating channel to the WD.

If the WDC selects an operating channel which is identical to an operating channel in which the P2P group has already started, there is no issue which should be considered. If the WDC selects an operating channel which is different from an operating channel, which is used for starting the P2P group, the WDC should consider there is an issue. That is, even though a discovery occurs in one channel based on the described concepts, the WD will change an operating channel of the WD, and a P2P Group Owner (GO) may propose to change the P2P group to some other operating channels. Here, the P2P GO may be the WDC. The WD may also explicitly request the WDC about operating channel information using a getOperatingChannel UPnP action including the following particular Dock request ID, e.g., getOperatingChannel UPnP action (Dock request ID). The Dock request ID denotes a docking session ID of a docking session which is established between the WD and the WDC.

While performing a docking operation, a WD may need to change a topology of the docking operation. So, if the WD selects a group of peripherals including a peripheral, the WD may request from the WDC information on a channel which operates the P2P group.

Alternatively, the WDC may provide information on all channels to the WD when requested, and the WD may determine that the WD wants to operate the P2P group on which channel.

An operating channel information get procedure in a communication system supporting a UPnP protocol according to an embodiment of the present invention has been described above, and a channel status information get procedure in a communication system supporting a UPnP protocol according to an embodiment of the present invention will now be described.

The channel status information may be obtained using a getChannelStatusInfo UPnP action message, which includes the following format "getChannelStatusInfo UPnP action ()."

The getChannelStatusInfo UPnP action may be called by a WD at any timing point during a pilot session. The WD selects a particular channel and transmits a getChannelStatusInfo UPnP action message to the WDC. After receiving the getChannelStatusInfo UPnP action message from the WD, the WDC may know a channel which the WD selects. Depending on which device (a WDC or a WD) is a GO, the GO will move an operating channel to the newly informed/selected channel.

A channel status information get procedure in a communication system supporting a UPnP protocol according to an embodiment of the present invention has been described above, and a peripheral information get procedure in a communication system supporting a UPnP protocol according to an embodiment of the present invention will now be described.

Firstly, after an L3 discovery, additional information for peripherals may be obtained, and a detailed description will follow below.

The additional information for the peripherals after the L3 discovery may be obtained through the following GetPeripheralInfo UPnP action. Here, the peripheral information get procedure, i.e., the GetPeripheralInfo UPnP action, is a PF query procedure, and the GetPeripheralInfo UPnP action uses the format GetPeripheralInfo UPnP action (peripheral ID or peripheral IDs).

The GetPeripheralInfo UPnP action takes a single peripheral ID or a plurality of peripheral IDs as an input argument. That is, if the WD transmits a GetPeripheralInfo UPnP action (peripheral ID or peripheral IDs) message to the WDC, the WDC transmits a GetPeripheralInfo UPnP action response message as a response message to the GetPeripheralInfo UPnP action message to the WD. The GetPeripheralInfo UPnP action response message includes PF information for a peripheral ID or peripheral IDs included in the GetPeripheralInfo UPnP action message. Here, the PF information may include a Medium Access Control (MAC) address and an IP address of a related peripheral, and the like.

A peripheral information get procedure in a communication system supporting a UPnP protocol according to an embodiment of the present invention has been described above, and a WDN information get procedure in a communication system supporting a UPnP protocol according to an embodiment of the present invention will now be described.

Additional information for a WDN after an L3 discovery may be obtained through the following GetWDNInfo UPnP action. Here, the WDN information get procedure, i.e., the GetWDNInfo UPnP action is a WDN query procedure, and the GetWDNInfo UPnP action uses the format GetWDNInfo UPnP action (WDN ID or WDN IDs).

The GetWDNInfo UPnP action takes a single WDN ID or a plurality of WDN IDs as an input argument. That is, if the WD transmits a GetWDNInfo UPnP action (WDN ID or WDN IDs) message to the WDC, the WDC transmits a GetWDNInfo UPnP action response message as a response message to the GetWDNInfo UPnP action (WDN ID or WDN IDs) message to the WD. The GetWDNInfo UPnP action response message includes WDN information for a WDN ID or WDN IDs included in the GetWDNInfo UPnP action message.

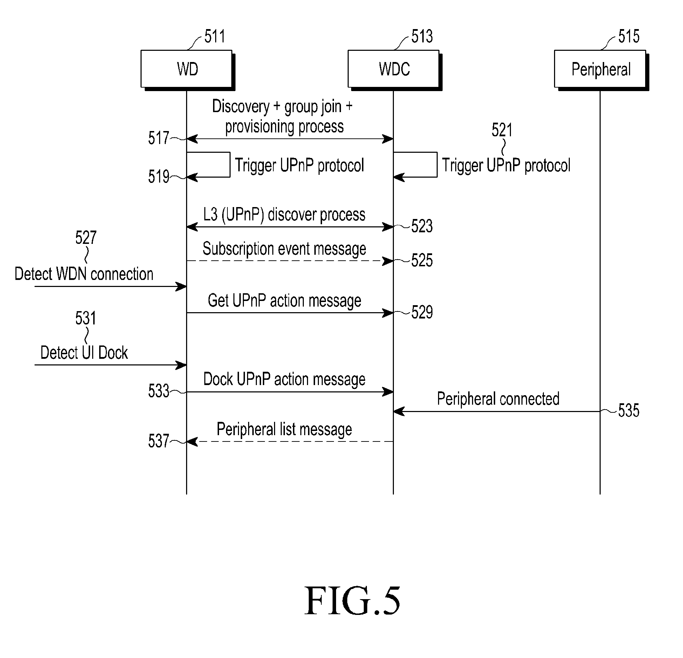

FIG. 5 is a signal processing diagram illustrating a two-stage user interaction process which uses a pilot protocol in a communication system supporting a UPnP protocol according to an embodiment of the present invention.

Referring to FIG. 5, the communication system includes a WD 511, a WDC 513, and a peripheral 515.

A discovery + group join + provisioning process is performed between the WD 511 and the WDC 513,at operation 517. After the discovery + group join + provisioning process is performed, the WD 511 triggers the UPnP protocol, at operation 519, and the WDC 513 also triggers the UPnP protocol, atoperation 521.

After the WD 511 and the WDC 513 trigger the UPnP protocol, an L3 (UPnP) discovery process is performed between the WD 511 and the WDC 513, at operation 523. After the L3 (UPnP) discovery process is performed, the WD 511 transmits a subscription event message to the WDC 513, at operation 525. The WD 511 detects that the WD 511 is connected to a WDN (not shown in FIG. 5), and the WD 511, which is connected to the WDN, transmits a Get UPnP action message to the WDC 513, at operation 529.

After detecting that an User Interface (UI) is docked to the WD 511, the WD 511 transmits a Dock UPnP action message to the WDC 513, atoperation 533.

The WDC 513 detects that the peripheral 515 is connected to the WDC 513, at operation 535. After detecting that the peripheral 515 is connected to the WDC 513, the WDC 513 transmits a List_Of_Peripherals message to the WD 511, atoperation 537.

Although FIG. 5 illustrates a two-stage user interaction process which uses a pilot protocol in a communication system supporting a UPnP protocol according to an embodiment of the present invention, various changes could be made to FIG. 5. For example, although shown as a series of operations, various operations in FIG. 5 could overlap, occur in parallel, occur in a different order, or occur multiple times.

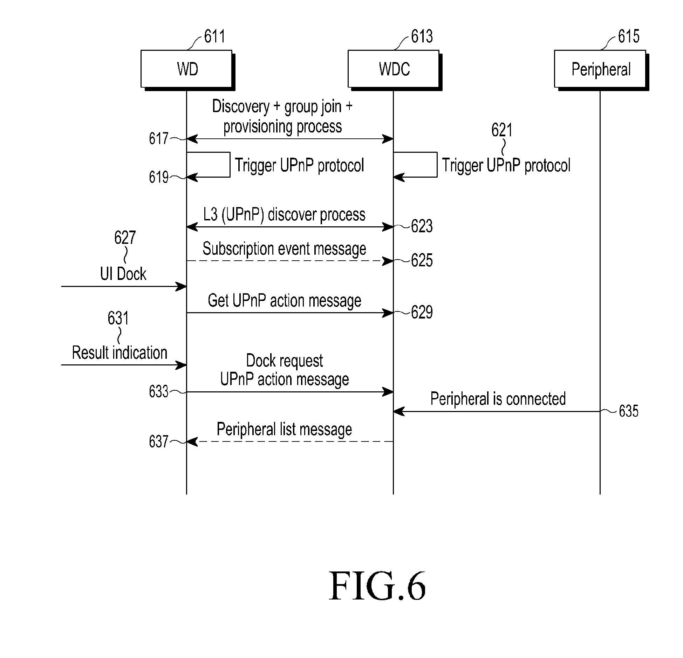

FIG. 6 is a signal processing diagram illustrating a single stage user interaction process which uses a pilot protocol in a communication system supporting a UPnP protocol according to an embodiment of the present invention.

Referring to FIG. 6, the communication system includes a WD 611, a WDC 613, and a peripheral 615.

A discovery + group join + provisioning process is performed between the WD 611 and the WDC 613, atoperation 617. After the discovery + group join + provisioning process is performed, the WD 611 triggers the UPnP protocol, atoperation 619, and the WDC 613 also triggers the UPnP protocol, atoperation 621.

After the WD 611 and the WDC 613 trigger the UPnP protocol, an L3 (UPnP) discovery process is performed between the WD 611 and the WDC 613, atoperation 623. After the L3 (UPnP) discovery process is performed, the WD 611 transmits a subscription event message to the WDC 613,at operation 625. The WD 611 detects that an UI is docked with an implicit dock,a t operation 627, and transmits a Get UPnP action message to the WDC 613,at operation 629.

The WD 611 transmits a result indication to an user, at operation 631, and transmits a Dock request UPnP action message to the WDC 613, at operation 633. The Dock request UPnP action message is transmitted in a success case.

The WDC 613 detects that the peripheral 615 is connected to the WDC 613, at operation 635. After detecting that the peripheral 615 is connected to the WDC 613, the WDC 613 transmits a List_Of_Peripherals message to the WD 611, at operation 637.

Although FIG. 6 illustrates a single step user interaction process using a pilot protocol in a communication system supporting a UPnP protocol according to an embodiment of the present invention, various changes could be made to FIG. 6. For example, although shown as a series of operations, various operations in FIG. 6 could overlap, occur in parallel, occur in a different order, or occur multiple times.

A WD which does not need to use peripherals may requests a WDC to undock. The undock request may be performed through an Undock UPnP action message. The Undock UPnP action message may be expressed as Undock UPnP action (Dock request ID).

If the WD intends to undock from the WDC, the WD transmits an Undock UPnP action message including a Dock request ID as an input argument to the WDC. After receiving the Undock UPnP action message including the Dock request ID from the WD, the WDC completely undocks the WD, which transmits the Undock UPnP action message including the Dock request ID from the WDC. The WDC may indicate that the WD is completely undocked from the WDC by transmitting an Undock UPnP action message as a response message to the Undock UPnP action message to the WD.

An undock procedure in a communication system supporting a UPnP protocol according to an embodiment of the present invention has been described above, and a peripheral undock procedure in a communication system supporting a UPnP protocol according to an embodiment of the present invention will now be described.

An Undock UPnP action may include peripheral IDs not the Dock request ID as an input argument, and an Undock UPnP action including the peripheral IDs as an input argument is a PF de-selection procedure. An Undock UPnP action which is used for the peripheral undock procedure may be expressed as Undock UPnP action (peripheral IDs).

If a WD intends to undock from specific peripherals, the WD transmits an Undock UPnP action (peripheral IDs) message including peripheral IDs corresponding to the specific peripherals to a WDC. After receiving the Undock UPnP action (peripheral IDs) message from the WD, the WDC undocks the WD from the specific peripherals corresponding to the peripheral IDs included in the Undock UPnP action (peripheral IDs) message, and transmits an Undock UPnP action (peripheral IDs) response message as a response message to the Undock UPnP action (peripheral IDs) message to the WD. After receiving the Undock UPnP action (peripheral IDs) response message from the WDC, the WD may determine that the WD has undocked from the specific peripherals corresponding to the peripheral IDs. In this case, the WD has undocked from the specific peripherals corresponding to the peripheral IDs, and is still connected to the WDC. So, an association between the WD and the WDC is maintained.

A peripheral undock procedure in a communication system supporting a UPnP protocol according to an embodiment of the present invention has been described above, and a WDN undock procedure in a communication system supporting a UPnP protocol according to an embodiment of the present invention will now be described.

An Undock UPnP action may include WDN IDs not the Dock request ID as an input argument, and an Undock UPnP action including the WDN IDs as an input argument is a WDN de-selection procedure. An Undock UPnP action which is used for the WDN undock procedure may be expressed as Undock UPnP action (WDN IDs).

If a WD intends to undock from specific WDNs, the WD transmits an Undock UPnP action (WDN IDs) message including WDN IDs corresponding to the specific WDNs to a WDC. After receiving the Undock UPnP action (WDN IDs) message from the WD, the WDC undocks the WD from the specific WDNs corresponding to the WDN IDs included in the Undock UPnP action (WDN IDs) message, and transmits an Undock UPnP action (WDN IDs) response message as a response message to the Undock UPnP action (WDN IDs) message to the WD. After receiving the Undock UPnP action (WDN IDs) response message from the WDC, the WD may determine that the WD has undocked from the specific WDNs corresponding to the WDN IDs. In this case, the WD has undocked from the specific WDNs corresponding to the WDN IDs, and is still connected to the WDC. So, an association between the WD and the WDC is maintained.

A WDN undock procedure in a communication system supporting a UPnP protocol according to an embodiment of the present invention has been described above, and a re-dock procedure in a communication system supporting a UPnP protocol according to an embodiment of the present invention will now be described.

A WD which is already docked to a particular WDN of a WDC may re-perform an additional Dock UPnP action including other WDN ID or peripheral IDs. A procedure which the WD performs the additional Dock UPnP action is a re-docking procedure. In this case, the first Dock UPnP action is still performed, so the WD does not need to re-perform an association operation. So, peripheral connections or WDN connections are directly established. Since the additional Dock UPnP action is successful, the WDC will return other Dock request ID in a Dock UPnP action response message as a response message to the Dock UPnP action message. The re-docking procedure may be performed by the following Dock UPnP action format Dock UPnP action (WDN IDs).

Here, the re-docking procedure may be performed like a docking procedure, i.e., the first Dock UPnP action except that the WD does not need to perform an association operation with the WDC.

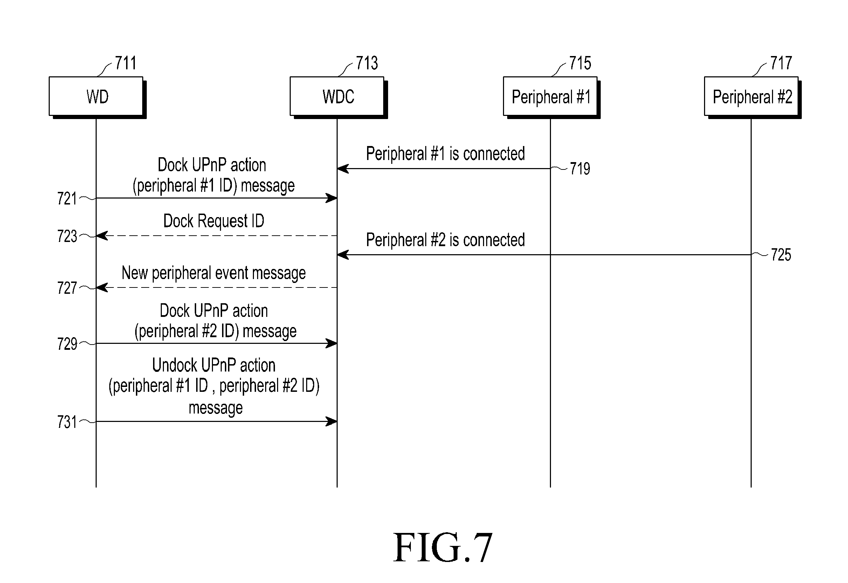

FIG. 7 is a signal processing diagram illustrating a re-dock and undock procedure in a communication system supporting a UPnP protocol according to an embodiment of the present invention.

Referring to FIG. 7, the communication system includes a WD 711, a WDC 713, a peripheral (#1) 715, and a peripheral (#2) 717.

The peripheral (#1) 715 is docked to the WDC 713, at operation 719, and the WD 711 transmits a Dock UPnP action (peripheral (#1) ID) message to the WDC 713, atoperation 721. The WDC 713 transmits a Dock Request ID to the WD 711, atoperation 723.

The peripheral (#2) 717 is docket to the WDC 713, atoperation 725. After detecting that the peripheral (#2) 717 is docket to the WDC 713, the WDC 713 transmits a new peripheral event message to the WD 711, atoperation 727. After receiving the new peripheral event message from the WDC 713, the WD 711 transmit a Dock UPnP action message including a peripheral (#2) ID as a peripheral ID of the peripheral (#2) 717, i.e., a Dock UPnP action (peripheral (#2) ID) message to the WDC 713, atoperation 729. Since an association action between the WD 711 and the WDC 713 has already been performed according to the Dock UPnP action (peripheral (#1) ID) message, there is no need of additionally performing the association action between the WD 711 and the WDC 713 in a re-docking procedure according to the Dock UPnP action (peripheral (#2) ID) message.

If the WD 711 intends to undock from the peripheral (#1) 715 and the peripheral (#2) 717 while the docking operation is performed between the WD 711 and the WDC 713, the WD 711 includes a peripheral ID for each of the peripheral (#1) 715 and the peripheral (#2) 717, i.e., the peripheral (#1) ID and the peripheral (#2) ID into an Undock UPnP action message to transmit the Undock UPnP action message to the WDC 713, atoperation 731. After receiving the Undock UPnP action message including the peripheral (#1) ID and the peripheral (#2) ID, i.e., an Undock UPnP action (peripheral (#1) ID, peripheral (#2) ID) message from the WD 711, the WDC 713 undocks the WD 711 from the peripheral (#1) 715 and the peripheral (#2) 717.

Although FIG. 7 illustrates a re-dock and undock procedure in a communication system supporting aUPnP protocol according to an embodiment of the present invention, various changes could be made to FIG. 7. For example, although shown as a series of operations, various operations in FIG. 7 could overlap, occur in parallel, occur in a different order, or occur multiple times.

In a case that, an L2 link (in this case, a P2P Group) is released if an L3 pilot protocol runs, the pilot protocol should be run without any issues after the L2 link is returned. Also, a history of the L3 protocol should be maintained. In an embodiment of the present invention, the L3 pilot protocol is based on aUPnP protocol, so at least IP address should be maintained same even if the L2 link is released.

The same conditions apply even if an underlying L2 link is released, and a new L2 link is initiated if a pilot protocol session is ongoing.

If the L2 link is released and becomes active again, UPnP device discovery and service discovery mechanisms for the L3 pilot protocol need to be run again.

Since a WD has subscribed to events of a CMS and docking services of a manageable WDC device, the WD will be receive any updates to a WDC data model or state variables as service events. For example, if a new peripheral is added to the WDC, the WDC performs an update operation for the WD using an event. Similarly, if a peripheral is disconnected or disassociated with a WDC, the WD will get an event from the WDC.

If a peripheral that is removed/dis-associated from the WDC is a part of a Dock request, the Dock request will still be held valid, and the WD will still be able to maintain an association with the WDC and other peripherals which are a part of the Dock request. If a removal of a peripheral has some changes to a docked state of the WD, information on the removal of the peripheral will be provided as an event.

In a communication system supporting a UPnP protocol according to an embodiment of the present invention, examples of state variables that a docking service may support are listed below:
No_Of_Peripherals_Connected;
Dock_State_Changes; and
List_Of_Peripherals.

The state variable No_Of_Peripherals_Connected denotes the number of peripherals that are currently connected to the WDC.

The state variable Dock_State_Changes denotes changes that happen to a currently docked state of a WD. The state variable Dock_State_Changes may hold changes to docked states of all WDs that are currently docked to a WDC. The changes may be a removal of a peripheral from a WDC, and the like.

The state variable List_Of_Peripherals denotes a complete list of peripherals that are currently connected to a WDC.

State variables which a docking service may support in a communication system supporting a UPnP protocol according to an embodiment of the present invention has been described above, and an auto WDN creation with capability matching procedure which uses capability matching will now be described.

Capability and a protocol which are supported on a WD and a WDC may not be the same. So, a WDN that is preconfigured on the WDC may not be always completely useful to the WD.

Accordingly, an embodiment of the present invention provides a mechanism whereby a WDN may be created based on matched capabilities of available peripherals on a WDC and a WD.

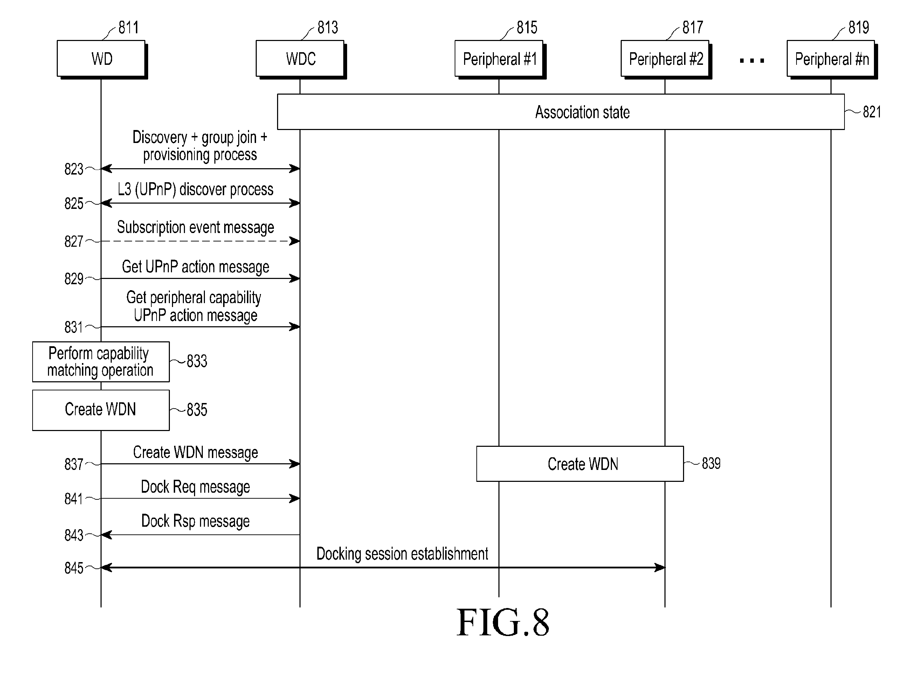

FIG. 8 is a signal processing diagram illustrating an auto WDN creation procedure based on capability matching which is performed in a WD in a communication system supporting a UPnP protocol according to an embodiment of the present invention.

Referring to FIG. 8, the communication system includes a WD 811, a WDC 813, a peripheral (#1) 815, a peripheral (#2) 817, ... , a peripheral (#n) 819.

An association operation among the WDC 813, the peripheral (#1) 815, the peripheral (#2) 817, ... , the peripheral (#n) 819 has been already performed, atoperation 821. Here, the peripheral (#1) 815, the peripheral (#2) 817, ... , the peripheral (#n) 819 are associated with the WDC 813.

A discovery + group join + provisioning process between the WD 811 and the WDC 813 is performed, at operation 823. After the discovery + group join + provisioning process is performed, an L3 (UPnP) discovery process is performed between the WD 811 and the WDC 813, at operation 825. After the L3 (UPnP) discovery process is performed between the WD 811 and the WDC 813, the WD 811 transmits a subscription event message to the WDC 813, at operation 827.

The WD 811 transmits a Get UPnP action message to the WDC 813, atoperation 829. The WD 811 transmits a Get Peripheral Capability UPnP action message to the WDC 813, at operation 831. After transmitting the Get Peripheral Capability UPnP action message, the WD 811 performs a capability matching operation, at operation 833. Upon performing the capability matching operation, the WD 811 may identify peripherals to which the WD 811 may be connected. After performing the capability matching operation, the WD 811 creates a WDN with peripherals which have the matched capabilities, at operation 835. In FIG. 8, it will be assumed that the peripherals which have the matched capabilities are the peripheral (#1) 815 and the peripheral (#2) 817.

The WD 811 transmits a Create WDN message to the WDC 813, at operation 837. Thereafter, a WDN is created between the peripheral (#1) 815 and the peripheral (#2) 817, at operation 839.

The WD 811 transmits a Dock Req message including a WDN ID for the generated WDN to the WDC 813, at operation 841. After receiving the Dock Req message from the WD 811, the WDC 813 transmits a Dock Rsp message as a response message to the Dock Req message to the WD 811, at operation 843. The Dock Rsp message includes a success parameter indicating a success for the Dock Req message. After receiving the Dock Rsp message from the WDC 813, the WD 811 determines to be docked using the capability matched WDN, and a docking session is established between the peripheral (#)1 815 and the peripheral (#2) 817, at operation 845. So, the WD 811 may be provided services of the peripheral (#1) 815 and the peripheral (#2) 817 through the established docking session.

Although FIG. 8 illustrates an auto WDN creation procedure based on capability matching which is performed in a WD in a communication system supporting a UPnP protocol according to an embodiment of the present invention, various changes could be made to FIG. 8. For example, although shown as a series of operations, various operations in FIG. 8 could overlap, occur in parallel, occur in a different order, or occur multiple times.

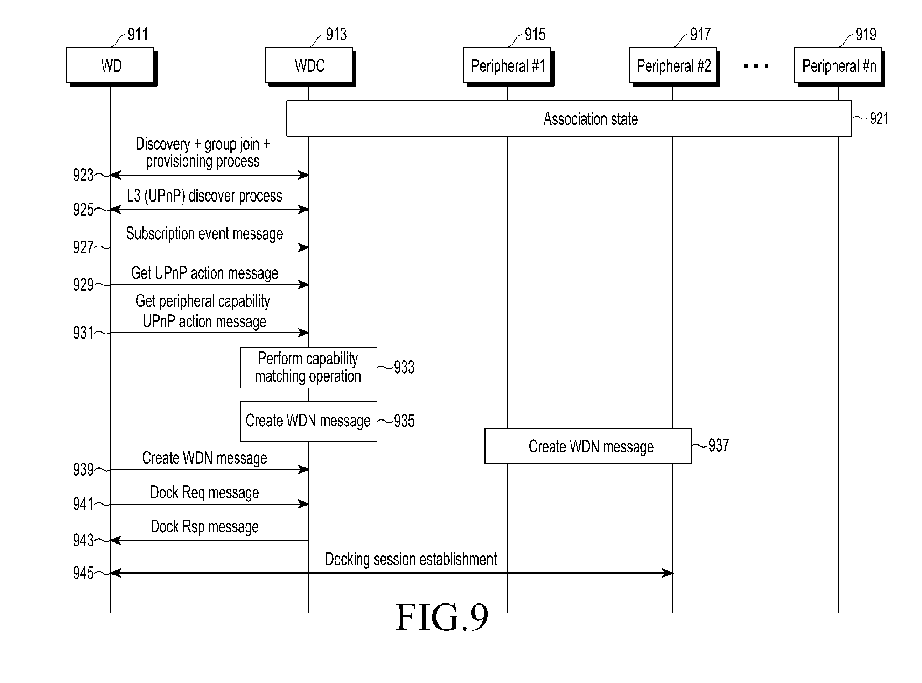

FIG. 9 is a signal processing diagram illustrating an auto WDN creation procedure based on capability matching which is performed in a WDC in a communication system supporting a UPnP protocol according to an embodiment of the present invention.

Referring to FIG. 9, the communication system includes a WD 911, a WDC 913, a peripheral (#1) 915, a peripheral (#2) 917, ... , a peripheral (#n) 919.

An association operation among the WDC 913, the peripheral (#1) 915, the peripheral (#2) 917, ... , the peripheral (#n) 919 has been already performed, at operation 921. Here, the peripheral (#1) 915, the peripheral (#2) 917, ... , the peripheral (#n) 919 are associated with the WDC 913.

A discovery + group join + provisioning process is performed between the WD 911 and the WDC 913, at operation 923. After the discovery + group join + provisioning process is performed, an L3 (UPnP) discovery process is performed between the WD 911 and the WDC 913, at operation 925. After the L3 (UPnP) discovery process is performed between the WD 911 and the WDC 913, the WD 911 transmits a subscription event message to the WDC 913, at operation 927.

The WD 911 transmits a Get UPnP action message to the WDC 913, at operation 929. The WD 911 transmits a Get Peripheral Capability UPnP action message to the WDC 913, atoperation 931.

After receiving the Get Peripheral Capability UPnP action message from the WD 911, the WDC 913 performs a capability matching operation, at operation 933. Upon performing the capability matching operation, the WDC 913 may identify peripherals to which the WDC 913 may be connected. After performing the capability matching operation, the WDC 913 creates a WDN with peripherals which have the matched capabilities, at operation 935. The peripherals of which capabilities are matched to a capability of the WD 911 are grouped as a WDN, and information on the WDN is informed to the WD 911. In FIG. 9, it will be assumed that the peripherals which have the matched capabilities are the peripheral (#1) 915 and the peripheral (#2) 917. So, a WDN is created between the peripheral (#1) 915 and the peripheral (#2) 917, at operation 937.

The WD 913 transmits a Create WDN message to the WD 911, at operation 939. The WD 911 transmits a Dock Req message including a WDN ID for the generated WDN to the WDC 913, at operation 941. After receiving the Dock Req message from the WD 911, the WDC 913 transmits a Dock Rsp message as a response message to the Dock Req message to the WD 911, at operation 943. The Dock Rsp message includes a success parameter indicating a success for the Dock Req message. After receiving the Dock Rsp message from the WDC 913, the WD 911 determines to be docked using the capability matched WDN, and a docking session is established between the peripheral #1 915 and the peripheral (#2) 917, at operation 945. The WD 911 may be provided services of the peripheral (#1) 915 and the peripheral (#2) 917 through the established docking session.

Although FIG. 9 illustrates an auto WDN creation procedure based on capability matching which is performed in a WDC in a communication system supporting a UPnP protocol according to an embodiment of the present invention, various changes could be made to FIG. 9. For example, although shown as a series of operations, various operations in FIG. 9 could overlap, occur in parallel, occur in a different order, or occur multiple times.

Firstly, a capability matched WDN is dynamically created on a WDC. In this case, the state variable List_of_WDNs is updated, and the updated state variable List_of_WDNs is evented to a WD. This enables the WD to issue a dock request to the capability matched WDN.

In auto WDN creation procedures based on capability matching in a communication system supporting a UPnP protocol according to an embodiment of the present invention, i.e., an auto WDN creation procedure based on capability matching which is performed in a WD in FIG. 8 and an auto WDN creation procedure based on capability matching which is performed in a WDC in FIG. 9, one WD is considered, however, it will be understood by those of ordinary skill in the art that auto WDN creation procedures based on capability matching in a communication system supporting a UPnP protocol according to an embodiment of the present invention may be applied to a plurality of WDs. The plurality of WDs may be connected to a WDC based on capabilities of the plurality of WDs and peripherals, and the WDC may segregate peripherals into WDNs that are capability matched to the plurality of WDs and provide information on the WDNs to the plurality of WDs for docking.

If a specific peripheral is already being used by one of WDs associated with a WDC, the specific peripheral should not be available for use for another WD that tries to dock with the WDC. So, information on this situation is signaled through an availability bit that is associated with the specific peripheral. The information may be used in conjunction with a capability while creating a WDN or when directly associating with the specific peripheral.

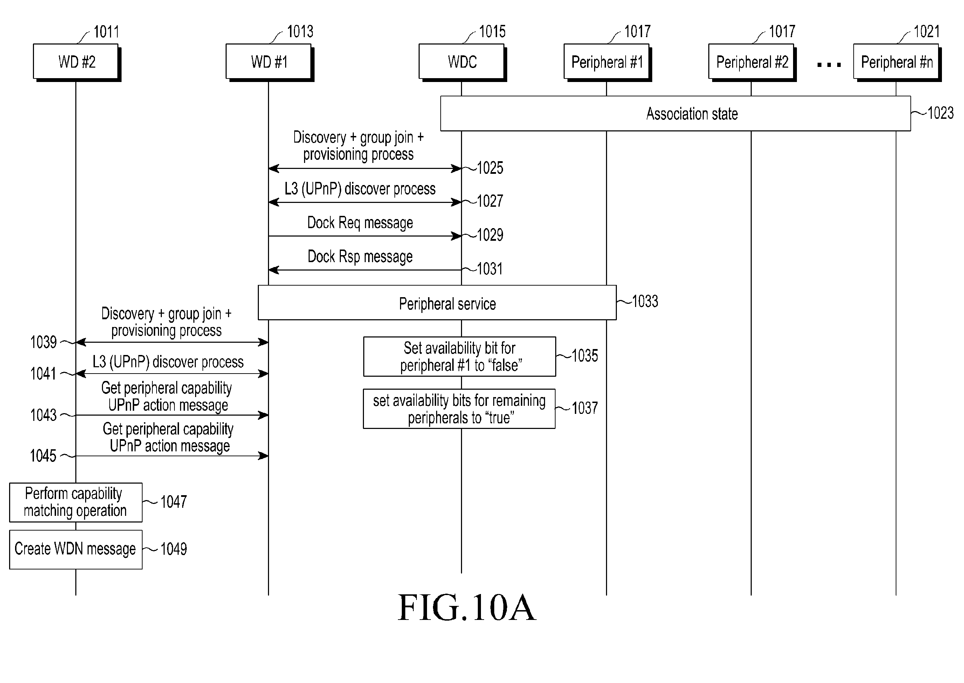

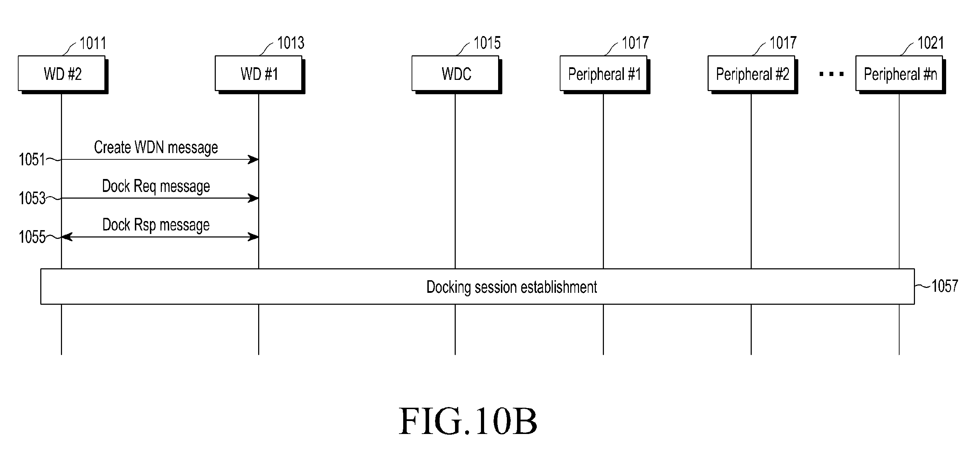

FIGS. 10A to 10B are signal processing diagrams illustrating an auto WDN creation procedure in which a peripheral availability is used in order to create a WDN in a communication system supporting aUPnP protocol according to an embodiment of the present invention.

Referring to FIGS. 10A to 10B, the communication system includes a WD (#2) 1011, a WD (#1) 1013, a WDC 1015, and a plurality of peripherals, e.g., n peripherals, i.e., a peripheral (#1) 1017, a peripheral (#2) 1019, ... , a peripheral (#n) 1021. In FIGS. 10A to 10B, it will be assumed that the WD (#1) 1013 is already docked to the peripheral (#1) 1017, and the WD (#2) 1011 intends to get information on the peripherals for docking.

An association operation among the WDC 1015, the peripheral (#1) 1017, the peripheral (#2) 1019, ... , the peripheral (#n) 1021 has been already performed, at operation 1023. Here, the peripheral (#1) 1017, the peripheral (#2) 1019, ... , the peripheral (#n) 1021 are associated with the WDC 1015.

A discovery + group join + provisioning process is performed between the WD (#1) 1013 and the WDC 1015, at operation 1025. After the discovery + group join + provisioning process is performed, an L3 (UPnP) discovery process is performed between the WD (#1) 1013 and the WDC 1015, at operation 1027. After the L3 (UPnP) discovery process is performed between the WD (#1) 1013 and the WDC 1015, the WD (#1) 1013 transmits a Dock Req message to the WDC 1015, at operation 1029. After receiving the Dock Req message from the WD (#1) 1013, the WDC 1015 transmits a Dock Rsp message as a response message to the Dock Req message to the WD (#1) 1013, at operation 1031.

The WD (#1) 1013 is docked to the peripheral (#1) 1017, and provided a peripheral service from the peripheral (#1) 1017, at operation 1033. In this case, a value of an available bit indicating a peripheral availability for the peripheral (#1) 1017 is set to a value indicating "false," at operation 1035. And, a value of an available bit for each of the peripheral (#2) 1019, ... , the peripheral (#n) 1021 is set to a value indicating "true," at operation 1037.

While the WD (#1) 1013 is provided a peripheral service from the peripheral (#1) 1017, a discovery + group join + provisioning process is performed between the WD (#1) 1013 and the WD (#2) 1011, at operation 1039. After the discovery + group join + provisioning process is performed, an L3 (UPnP) discovery process is performed between the WD (#1) 1013 and the WD (#2) 1011, at operation 1041. After the L3 (UPnP) discovery process is performed between the WD (#1) 1013 and the WD (#2) 1011, the WD (#2) 1011 transmits a Get peripheral capability UPnP action message and a Get peripheral availability UPnP action message to the WD #1 1013, at operations 1043 and 1045.

After transmitting the Get Peripheral Capability UPnP action message, the WD (#2) 1011 performs a capability matching operation, at operation 1047. Upon performing the capability matching operation, the WD (#2) 1011 may identify peripherals to which the WD (#2) 1011 may be connected. After performing the capability matching operation, the WD (#2) 1011 creates a WDN with peripherals which have the matched capabilities, at operation 1049. In FIGS. 10A to 10B, it will be assumed that the peripherals which have the matched capabilities are the peripheral (#2) 1019 and the peripheral (#n) 1021.

The WD (#2) 1011 transmits a Create WDN message to the WD (#1) 1013, at operation 1051. The WD (#2) 1011 transmits a Dock Req message including a WDN ID for the generated WDN to the WD (#1) 1013,at operation 1053. After receiving the Dock Req message from the WD (#2) 1011, the WD (#1) 1013 transmits a Dock Rsp message as a response message to the Dock Req message to the WD (#2) 1011, at operation 1055. The Dock Rsp message includes a success parameter indicating a success for the Dock Req message. After receiving the Dock Rsp message from the WD (#1) 1013, the WD (#2) 1011 determines to be docked using the capability matched WDN, and a docking session is established between the peripheral (#2) 1019 and the peripheral (#n) 1021. So, the WD (#2) 1011 may be provided services of the peripheral (#2) 1019 and the peripheral (#n) 1021 through the established docking session.

Although FIGS. 10A to 10B illustrate an auto WDN creation procedure in which a peripheral availability is used in order to create a WDN in a communication system supporting a UPnP protocol according to an embodiment of the present invention, various changes could be made to FIGS. 10A to 10B. For example, although shown as a series of operations, various operations in FIGS. 10A to 10B could overlap, occur in parallel, occur in a different order, or occur multiple times.

An auto WDN creation procedure in which a peripheral availability is used in order to create a WDN in a communication system supporting a UPnP protocol according to an embodiment of the present invention has been described with reference to FIGS. 10A to 10B, and an auto docking procedure without an user interaction will be described below.

A user intervention, i.e. selection of a WDN or peripherals may be required to support frequent connections to a WDC. Additional methods may be used to identify and signal an intent to auto docking to the WDC, and a detailed description will be followed.

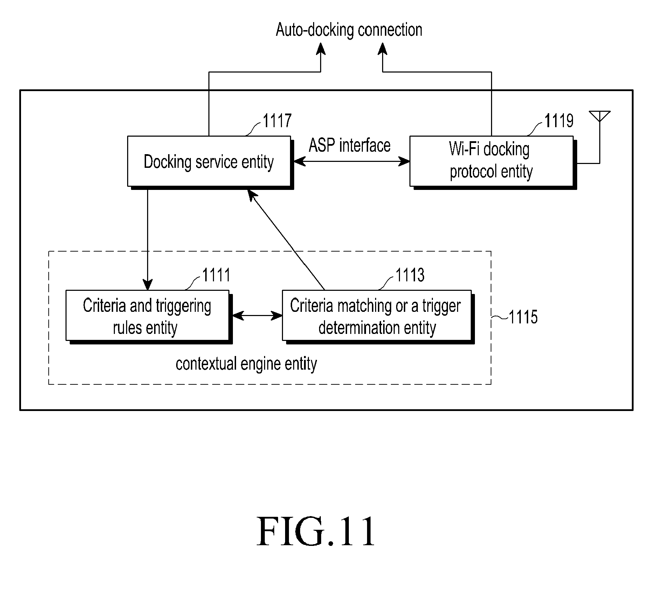

FIG. 11 is a block diagram illustrating a structure of a WD and a docking service for auto docking in a communication system supporting a UPnP protocol according to an embodiment of the present invention.

Referring to FIG. 11, a structure of a WD and a docking service indicates overall architecture elements for auto docking feature handling. Elements in FIG. 11 include new elements criteria and a triggering rule element which will store rules for triggering auto docking connection procedures. The elements criteria matching or the trigger determination evaluates conditions for trigger based on a triggering rule element set including the triggering rule elements. An entity including two blocks, i.e., a criteria and triggering rules entity 1111 and criteria matching or a trigger determination entity 1113, is a contextual engine entity 1115. Here, an actual auto-docking procedure is supported in a docking service entity 1117 and a Wi-Fi docking protocol entity 1119. A main interface between the docking service entity 1117 and the Wi-Fi docking protocol entity 1119 is an Application Service Platform (ASP).

A detailed description of the contextual engine entity 1115 will now be described.

If the WD triggers an auto docking connection procedure, the contextual engine entity 1115 performs an operation of identifying the triggering rules or criteria. Whenever the WD triggers an auto docking connection with a particular WDC and sets the auto docking to "true," the docking service entity 1117 stores information related to auto docking, i.e., auto docking related information. For example, the auto docking related information may be a MAC address of the WDC. Alternatively, the auto docking related information may be a MAC address of the WD, or some additional information for a WDN ID.

The criteria matching or triggering determination entity 1113 may include different criteria to trigger an auto docking connection, and the different criteria will be described as follows:
(1) location information, for example, the location information may be Global Positioning System (GPS) information, In-Door location information, and the like;
(2) if a WD and/or a WDC move to a particular location, the WD and the WDC will trigger the auto docking connection, for example, if the WD enters a meeting room to which the WDC belongs, an auto docking connection may be automatically triggered. This criterion is very useful in an office or enterprise context;
(3) range, which denotes a distance between the WD and the WDC;
(4) line of sight, which may be determined based on signal strength for a D band;
(5) vicinity based triggers (for example, Received signal strength indication (RSSI) strength), wherein if RSSI values reach a preset threshold value, a vicinity based approach scheme triggers an auto docking connection; and
(6) NFC tap triggers, wherein a tap of a WD and a WDC which use an NFC scheme may trigger an auto docking connection.

The criteria to trigger the auto docking connection are defined in the contextual engine 1115. The auto docking connection criteria proposed in an embodiment of the present invention are just example criteria, so there may be possible other criteria to trigger the auto docking connection trigger.

Meanwhile, a user may have flexibility on setting a required criterion for auto docking procedures. If the contextual engine 1115 determines or inputs an auto docking criterion set including the auto docking criteria, the contextual engine 1115 automatically triggers the auto-docking connection, and informs a docking service for started auto docking connections.

An auto docking connection procedure will now be described.

The auto docking connection procedure may be implemented with various schemes. In an embodiment according to the present invention, an auto docking connection procedure, which is implemented based on a service naming based approach scheme, an auto docking connection procedure, which is implemented based on a service discovery based approach scheme, an auto docking connection procedure, which is implemented based on a WDC initiated approach scheme, an auto docking connection procedure, which is implemented based on a WD initiated approach scheme, an auto docking connection procedure, which is implemented based on a WDC initiated approach scheme which uses a fixed connection, an auto docking connection procedure, which is implemented based on an NFC scheme, and an auto docking connection procedure, which is implemented based on an NFC scheme without an auto docking context are considered.

Firstly, an auto docking connection procedure which is implemented based on a service naming based approach scheme in a communication system supporting a UPnP according to an embodiment of the present invention will now be described.

The auto docking connection procedure which is implemented based the service naming based approach scheme is based on a probe exchange and a service hash. Before an auto docking may be used, a WD should generate an user centric WDN or an user/WD created WDN on a WDC. After the WDN is generated on the WDC, the WDN stores an unique WDN ID of a WD which creates a WDN together with the WDN. The WDN is uniquely identified in the WDC using the WDN ID. In an implementation according to the embodiments of the present invention, the WDN ID may be generated by the WDC. In other implementations, the WDN ID may be directly assigned by the WD. The WD stores a WDN ID of a WDN that the WD intends to auto dock in future. The WDN ID may be a MAC address of the WD or any other unique value that may be used to distinguish the WD. The WD remembers the MAC address of the WDC for a future search and auto connection.

After the auto docking connection procedure which is implemented based on the service naming based approach scheme is completed, the WD tries to connect to the WDC, and the WD may use an auto mechanism. The WD may transmit a probe request message with a service hash for a service name which the WD searches. In most cases, the service hash for the service name is a reverse Domain Name Server (DNS) notation for the service name. In a docking case, the service hash for the service name may be a docking or a WDC or a combination of the docking and the WDC. An example of the service hash for the service name may be org.wi-fi.docking or org.wi-fi.docking.WDC.

To enable auto docking, the WD needs to know whether the WDN which the WD creates is available on the WDC. To enable to know whether the WDN which the WD creates is available on the WDC, the WDN ID may be added to an end of the service name. An example of the service name to which the WDN ID is added may be org.wi-fi.docking.WDC.WDN1234, and many other variations of notation for the service name with WDN ID may exist. If the WDC has an unique ID or a name, the unique ID or the name may be added to the service name in order to more accurately identify the WDN. The WD will use a MAC address of the WDC to search a WDN in a particular WDN.

If the WD wants to connect to all peripherals on the WDC, a wildcard ID or a default WDN value may be used. The default WDN value has a predefined WDN ID. If the WDC detects a match after receiving the probe request message, the WDC will transmit a probe response message including a full service name including information on the WDN. The probe response message will provide confirmation information indicating that the WDC has detected the WDC which the WD searches to the WD.

If the WDC does not support WDNs or only supports a default WDN, an unique reserved ID may be assigned to signal information on a status that the WDC does not support the WDNs or only supports the default WDN. If optimization for the service name is required, the WDC may just return a basic service name without an unique WDN ID.

After receiving the probe response message, the WD transmits a dock request message including a special flag to indicate auto docking. The special flag will allow the WDC to know that the WD will connect without any user intervention. It will be assumed that the special flag is an "AutoDock" flag.

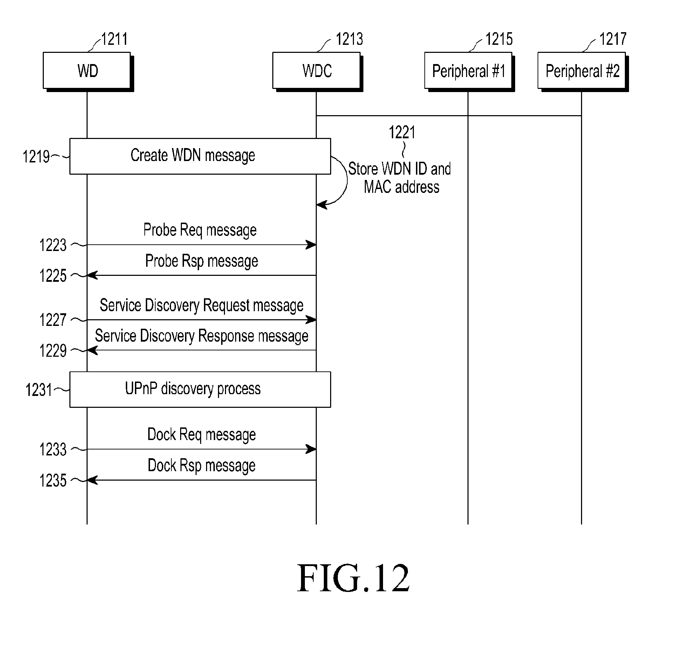

FIG. 12 is a signal processing diagram illustrating an auto docking connection procedure which is implemented based on a service naming based approach scheme in a communication system supporting a UPnP according to an embodiment of the present invention.

Referring to FIG. 12, the communication system includes a WD 1211, a WDC 1213, and a plurality of peripherals, e.g., two peripherals, i.e., a peripheral (#1) 1215 and a peripheral (#2) 1217.

The WD 1211 creates a WDN with the WDC 1213, at operation 1219. The WDC 1213 stores a WDN ID of the WDN, which the WD 1211 has created and a MAC address of the WD 1211, at operation 1221. After creating the WDN with the WDC 1213, the WD 1211 transmits a Probe Req message including a service hash and a WDN ID to the WDC 1213, at operation 1223. After receiving the Probe Req message from the WD 1211, the WDC 1213 transmits a Probe Rsp message as a response message to the Probe Req message to the WD 1211, at operation 1225. The Probe Rsp message includes a service name and the WDN ID.

After receiving the Probe Rsp message from the WDC 1213, the WD 1211 transmits a Service Discovery Request message to the WDC 1213, at operation 1227. After receiving the Service Discovery Request message from the WD 1211, the WDC 1213 transmits a Service Discovery Response message as a response message to the Service Discovery Request message to the WD 1211, at operation 1229.

The WD 1211 receives the Service Discovery Response message from the WDC 1213, so a UPnP discovery process between the WD 1211 and the WDC 1213 is performed, at operation 1231. After performing the UPnP discovery process, the WD 1211 transmits a Dock Req message to the WDC 1213, at operation 1233. The Dock Req message includes the WDN ID and an AutoDock flag. After receiving the Dock Req message from the WD 1211, the WDC 1213 transmits a Dock Rsp message as a response message to the Dock Req message to the WD 1211, at operation 1235.

Although FIG. 12 illustrates an auto docking connection procedure which is implemented based on a service naming based approach scheme in a communication system supporting a UPnP according to an embodiment of the present invention, various changes could be made to FIG. 12. For example, although shown as a series of operations, various operations in FIG. 12 could overlap, occur in parallel, occur in a different order, or occur multiple times.

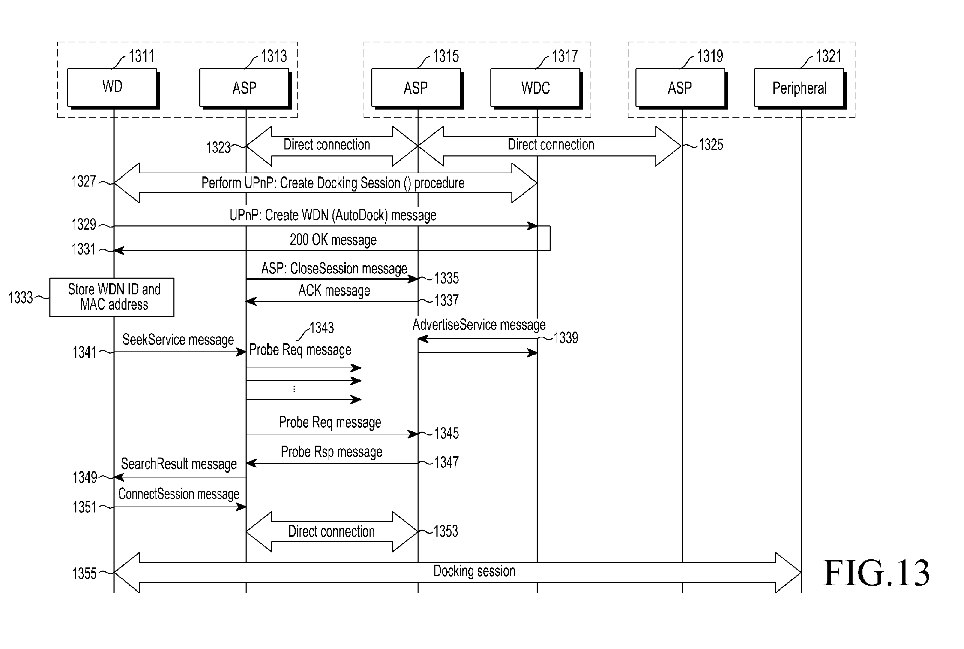

FIG. 13 is a signal processing diagram illustrating an operating procedure of each ASP in a case that an auto docking connection procedure which is implemented based on a service naming based approach scheme is performed in a communication system supporting aUPnP according to an embodiment of the present invention.

Referring to FIG. 13, the communication system includes a WD 1311, an ASP 1313, an ASP 1315, a WDC 1317, an ASP 1319, and a peripheral 1321. The ASP 1313 is an ASP for the WD 1311, the ASP 1315 is an ASP for the WDC 1317, and the ASP 1319 is an ASP for the peripheral 1321.

A direct connection is established between the ASP 1313 and the ASP 1315, at operation 1323, and a direct connection is established between the ASP 1315 and the ASP 1319, at operation 1325. A UPnP: Create Docking Session () procedure which generates a docking session is performed between the WD 1311 and the WDC 1317, at operation 1327. After the UPnP: Create Docking Session () procedure is performed, the WD 1311 transmits aUPnP: Create WDN (AutoDock) message which requests to create a WDN with an auto docking scheme to the WDC 1317, at operation 1329. After receiving the UPnP: Create WDN (AutoDock) message from the WD 1311, the WDC 1317 transmits a 200 OK message to the WD 1311, at operation 1331. The 200 OK message includes a WDN ID.

The WD 1311 stores a WDN ID for the created WDN and a MAC address of the WDC 1317, at operation 1333. The ASP 1313 transmits an ASP: CloseSession message which closes a session to the ASP 1315, at operation 1335. After receiving the ASP: CloseSession message from the ASP 1313, the ASP 1315 transmits an ACK message as a response message to the ASP: CloseSession message to the ASP 1313, at operation 1337.

The WDC 1317 advertises a new service to the ASP 1315 using an AdvertiseService message, at operation 1339. The AdvertiseService message may include the following parameters:
a. Org.wifi.docking.wdc.wdnid; and
b. Auto_accept=true.

Here, the Org.wifi.docking.wdc.wdnid denotes a service name, and the Auto_accept is a flag indicating whether an auto docking is accepted. If a value of the Auto_accept is "true," the Auto_accept indicates that the auto docking is accepted. If a value of the Auto_accept is "false," the Auto_accept indicates that the auto docking is not accepted.

The WD 1311 transmits a SeekService message including the following parameters to the ASP 1313, at operation 1341:.
a. Org.wifi.docking.WDC.WDNID; and
b. Mac address of WDC.

The Org.wifi.docking.WDC.WDNID denotes a service name, and the Mac address of WDC denotes a MAC address of the WDC 1317.

After receiving the SeekService message from the WD 1311, the ASP 1313 continuously seeks a service of which a service name is the Org.wifi.docking.WDC.WDNID through an air, at operations 1343 and 1345. That is, the ASP 1313 continuously transmits a probe request message to the ASP 1315.

If the WD 1311 and the WDC 1317 get close to each other in a Wi-Fi range, the ASP 1315 of the WDC 1317 transmits a probe response message as a response message to the probe request message to the ASP 1313, at operation 1347.

After receiving the probe response message from the ASP 1315, the ASP 1313 transmits a SearchResult message which informs the availability of the WDN to the WD 1311, at operation 1349. After receiving the SearchResult message from the ASP 1313, the WD 1311 transmits a ConnectSession message which requests a session connection to the ASP 1313, at operation 1351.

After receiving the ConnectSession message from the WD 1311, a direct connection procedure is performed between the ASP 1313 and the ASP 1315, at operation 1353, the Auto_accept is set to "true," that is, a related service is in an auto-accept mode, so there will be no user interaction related to the service.

After the direct connection procedure is completed between the ASP 1313 and the ASP 1315, a docking session is established between the WD 1311 and the peripheral 1321, at operation 1355.

Although FIG. 13 illustrates an operating procedure of each ASP in a case that an auto docking connection procedure which is implemented based on a service naming based approach scheme is performed in a communication system supporting a UPnP according to an embodiment of the present invention, various changes could be made to FIG. 13. For example, although shown as a series of operations, various operations in FIG. 13 could overlap, occur in parallel, occur in a different order, or occur multiple times.

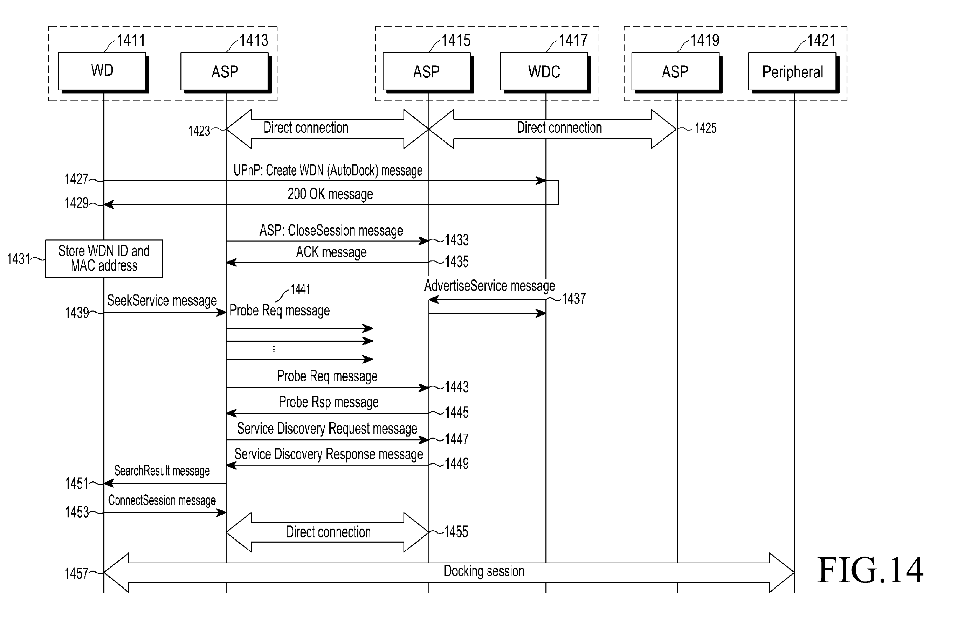

FIG. 14 is a signal processing diagram illustrating an operating procedure of each ASP in a case that an auto docking connection procedure which is implemented based on a service discovery based approach scheme is performed in a communication system supporting a UPnP according to an embodiment of the present invention.

Referring to FIG. 14, the communication system includes a WD 1411, an ASP 1413, an ASP 1415, a WDC 1417, an ASP 1419, and a peripheral 1421. The ASP 1413 is an ASP for the WD 1411, the ASP 1415 is an ASP for the WDC 1417, and the ASP 1419 is an ASP for the peripheral 1421.

In the auto docking connection procedure, which is implemented based on the service discovery based approach scheme in a communication system supporting a UPnP according to an embodiment of the present invention, a service discovery message including a service name included in a service discovery payload is created. Remaining conditions except for the service discovery message are identical to conditions which will be assumed in an auto docking connection procedure which is implemented based on a service naming based approach scheme.

After the WD searches a WDC through probe mechanisms, the WD transmits a service discovery message to the WDC which asks a WDN which the WD searches. In probe exchanges, while only a service hash is used, a full service name may be used in service discovery request messages. If the WD wants to connect to all peripherals on the WDC, a wildcard ID or a default WDN value may be used. If the WDC is matched, the WDC transmits a service discovery response message including a full name as in a probe response message as well as other service related information.

If the WDC does not support WDNs, or only supports a default WDN, a unique reserved ID may be assigned to signal information on a status that the WDC does not support the WDNs, or only supports the default WDN. If optimization for the service name is required, the WDC may just return a basic service name without an unique WDN ID.

After receiving the probe response message, the WD transmits a dock request message with a special flag to indicate an auto docking. The special flag will allow the WDC to know that the WD will connect without any user intervention.

A direct connection is established between the ASP 1413 and the ASP 1415, at operation 1423, and a direct connection is established between the ASP 1415 and the ASP 1419, at operation 1425.

The WD 1411 transmits a UPnP: Create WDN (AutoDock) message which requests to create a WDN with an auto docking scheme to the WDC 1417, at operation 1427. After receiving the UPnP: Create WDN (AutoDock) message from the WD 1411, the WDC 1417 transmits a 200 OK message to the WD 1411, at operation 1429. The 200 OK message includes a WDN ID.

The WD 1411 stores a WDN ID for the created WDN and a MAC address of the WDC 1417, at operation 1431. The ASP 1413 transmits an ASP: CloseSession message which closes a session to the ASP 1415, at operation 1433. After receiving the ASP: CloseSession message from the ASP 1413, the ASP 1415 transmits an ACK message as a response message to the ASP: CloseSession message to the ASP 1413, at operation 1435.

The WDC 1417 advertises a new service using an AdvertiseService message (operation 1437). The AdvertiseService message may include the following parameters:
a. Org.wifi.docking.wdc;
b. Auto_accept=true; and
c. Service information = WDN Info.

The Org.wifi.docking.wdc denotes a service name, and the Auto_accept is a flag indicating whether an auto docking is accepted. If a value of the Auto_accept is "true," the Auto_accept indicates that the auto docking is accepted. If a value of the Auto_accept is "false," the Auto_accept indicates that the auto docking is not accepted. The Service information is a parameter indicating service information, and includes WDN information.

The WD 1411 transmits a SeekService message including the following parameters to the ASP 1413, at operation 1439:
a. Org.wifi.docking.WDC;
b. Mac address of WDC; and
c. Service Information Request: WDNID:WDN identifier.

The Org.wifi.docking.WDC denotes a service name, the Mac address of WDC denotes a MAC address of the WDC 1417, and the Service Information Request denotes a WDN ID which requests service information.

After receiving the SeekService message from the WD 1411, the ASP 1413 continuously seeks a service of which a service name is the Org.wifi.docking.WDC through an air, at operations 1441 and 1443. That is, the ASP 1413 continuously transmits a probe request message to the ASP 1415.

If the WD 1411 and the WDC 1417 get close to each other in a Wi-Fi range, the ASP 1415 of the WDC 1417 transmits a probe response message as a response message to the probe request message to the ASP 1413, at operation 1445.

After receiving the probe response message from the ASP 1415, the ASP 1413 will request the ASP 1415 to check the WDN ID by transmitting a Service Discovery Request message including a WDN ID, at operation 1447. Here, the Service Discovery Request message includes a Query Data: WDNID: Identifier.

After receiving the Service Discovery Request message, the ASP 1415 transmits a Service Discovery Response message including WDN information as a response message to the Service Discovery Request message to the ASP 1413, at operation 1449.

After receiving the probe response message from the ASP 1415, the ASP 1413 transmits a SearchResult message for informing an availability of the WDN to the WD 1411, at operation 1451. After receiving the SearchResult message from the ASP 1413, the WD 1411 transmits a ConnectSession message for requesting a session connection to the ASP 1413, at operation 1453.

After receiving the ConnectSession message from the WD 1411, a direct connection procedure is performed between the ASP 1413 and the ASP 1415, at operation 1455, the Auto_accept is set to "true," that is, a related service is in an auto-accept mode, so there will be no user interaction related to the service.

After the direct connection procedure is completed between the ASP 1413 and the ASP 1415, a docking session is established between the WD 1411 and the peripheral 1421, at operation 1457.

Although FIG. 14 illustrates an operating procedure of each ASP in a case that an auto docking connection procedure which is implemented based on a service discovery based approach scheme is performed in a communication system supporting a UPnP according to an embodiment of the present invention, various changes could be made to FIG. 14. For example, although shown as a series of operations, various operations in FIG. 14 could overlap, occur in parallel, occur in a different order, or occur multiple times.

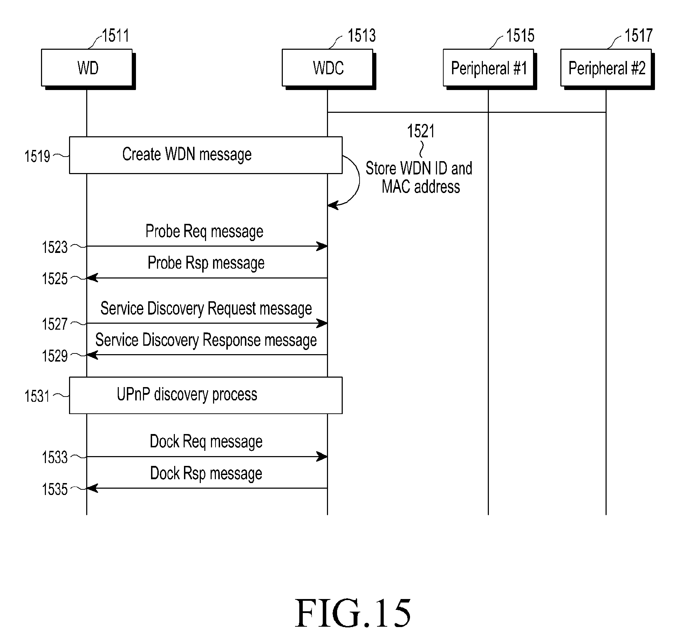

FIG. 15 is a signal processing diagram illustrating an auto docking connection procedure which is implemented based on a service discovery based approach scheme in a communication system supporting a UPnP according to an embodiment of the present invention.

Referring to FIG. 15, the communication system a WD 1511, a WDC 1513, and a plurality of peripherals, e.g., two peripherals, i.e., a peripheral (#1) 1515 and a peripheral (#2) 1517.

The WD 1511 creates a WDN with the WDC 1513, at operation 1519. The WDC 1513 stores a WDN ID of the WDN which the WD 1511 has created and a MAC address of the WD 1511, at operation 1521. After creating the WDN with the WDC 1513, the WD 1511 transmits a Probe Req message including a service hash to the WDC 1513, at operation 1523. After receiving the Probe Req message from the WD 1511, the WDC 1513 transmits a Probe Rsp message as a response message to the Probe Req message to the WD 1511, at operation 1525. The Probe Rsp message includes a service name.

After receiving the Probe Rsp message from the WDC 1513, the WD 1511 transmits a Service Discovery Request message to the WDC 1513, at operation 1527. After receiving the Service Discovery Request message from the WD 1511, the WDC 1513 transmits a Service Discovery Response message as a response message to the Service Discovery Request message to the WD 1511, at operation 1529. The Service Discovery Response message includes a service name and the WDN ID.

The WD 1511 receives the Service Discovery Response message from the WDC 1513, so a UPnP discovery process between the WD 1511 and the WDC 1513 is performed, at operation 1531. After performing the UPnP discovery process, the WD 1511 transmits a Dock Req message to the WDC 1513, at operation 1533. The Dock Req message includes the WDN ID and an AutoDock flag. After receiving the Dock Req message from the WD 1511, the WDC 1513 transmits a Dock Rsp message as a response message to the Dock Req message to the WD 1511, at operation 1535.

Although FIG. 15 illustrates an auto docking connection procedure which is implemented based on a service discovery based approach scheme in a communication system supporting a UPnP according to an embodiment of the present invention, various changes could be made to FIG. 15. For example, although shown as a series of operations, various operations in FIG. 15 could overlap, occur in parallel, occur in a different order, or occur multiple times.

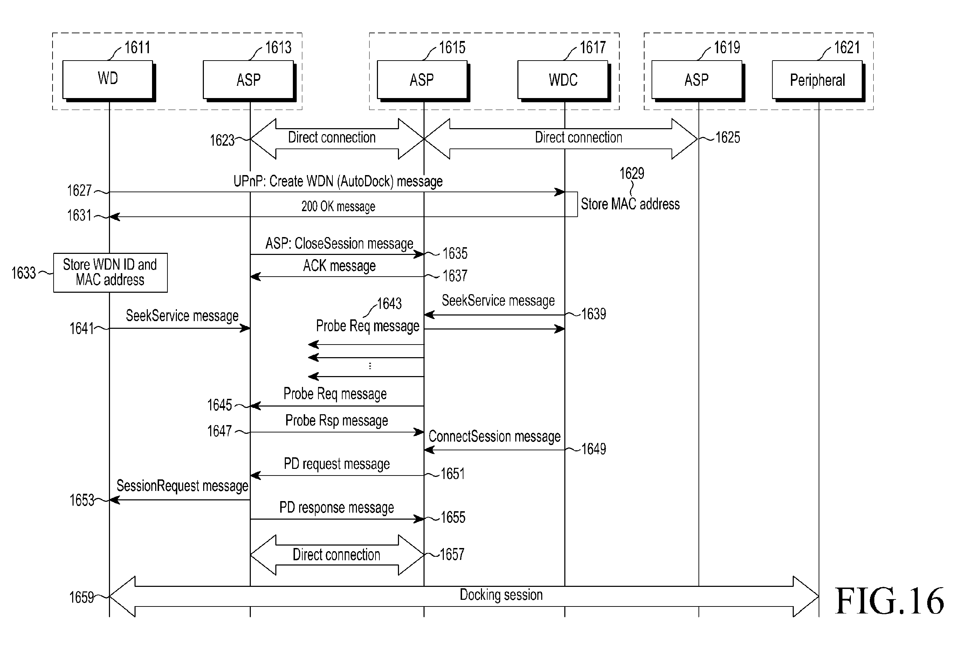

FIG. 16 is a signal processing diagram illustrating an operating procedure of each ASP in a case that an auto docking connection procedure which is implemented based on a WDC initiated approach scheme is performed in a communication system supporting a UPnP according to an embodiment of the present invention.

Referring to FIG. 16, the communication system includes a WD 1611, an ASP 1613, an ASP 1615, a WDC 1617, an ASP 1619, and a peripheral 1621. The ASP 1613 is an ASP for the WD 1611, the ASP 1615 is an ASP for the WDC 1617, and the ASP 1619 is an ASP for the peripheral 1621.

A direct connection is established between the ASP 1613 and the ASP 1615, at operation 1623, and a direct connection is established between the ASP 1615 and the ASP 1619, at operation 1625. The WD 1611 transmits a UPnP: Create WDN (AutoDock) message which requests to create a WDN with an auto docking scheme to the WDC 1617, at operation 1627. After receiving the UPnP: Create WDN (AutoDock) message from the WD 1611, the WDC 1617 stores a MAC address of the WD 1611, at operation 1629, and transmits a 200 OK message to the WD 1611, at operation 1631. The 200 OK message includes a WDN ID.

The WD 1611 stores a WDN ID for the created WDN, and a MAC address of the WDC 1617, at operation 1633. The ASP 1613 transmits an ASP: CloseSession message which closes a session to the ASP 1615, at operation 1635. After receiving the ASP: CloseSession message from the ASP 1613, the ASP 1615 transmits an ACK message as a response message to the ASP: CloseSession message to the ASP 1613, at operation 1637.

The WDC 1617 transmits a SeekService message including the following parameters to the ASP 1615, at operation 1639:
a. Org.wifi.docking.Dockee or org.wifi.docking; and
b. Mac address of Dockee.

The Org.wifi.docking.Dockee or org.wifi.docking denotes a service name, and the Mac address of Dockee denotes a MAC address of the WD 1611.

The WD 1611 transmits a SeekService message including the following parameters to the ASP 1613, at operation 1641:
a. Org.wifi.docking.WDC;
b. Mac address of WDC; and
c. Service Information Request: WDNID:WDN identifier.

The Org.wifi.docking.WDC denotes a service name, the Mac address of WDC denotes a MAC address of the WDC 1617, and the Service Information Request denotes a WDN ID which requests service information.

The ASP 1615 continuously seeks a service of which a service name is the Org.wifi.docking.WDC through an air, at operations 1643 and 1645. That is, the ASP 1615 continuously transmits a probe request message to the ASP 1613.

If the WD 1611 and the WDC 1617 get close to each other in a Wi-Fi range, the ASP 1613 transmits a probe response message as a response message to the probe request message to the ASP 1615, at operation 1647.

After the ASP 1615 receives the probe response message from the ASP 1613, the WDC 1617 transmits a ConnectSession message to the ASP 1615, at operation 1649. After receiving the ConnectSession message from the WDC 1617, the ASP 1615 transmits a Provision Discovery (PD) request message to the ASP 1613, at operation 1651. The PD request message includes session instance data including a WDN ID.

After receiving the PD request message from the ASP 1615, the ASP 1613 transmits a SessionRequest message to the WD 1611, at operation 1653. The SessionRequest message includes a WDN ID. The ASP 1613 detects the WDN ID included in the SessionRequest message, automatically accepts a request corresponding to the PD request message, and transmits a PD response message to the ASP 1615, at operation 1655. Alternatively, the WD 1611 may transmit a ConfirmSession message without a User interaction.

After the ASP 1615 receives the PD response message from the ASP 1613, a direct connection procedure is performed between the ASP 1613 and the ASP 1615, at operation 1657, the Auto_accept is set to "true," that is, a related service is in an auto-accept mode, so there will be no user interaction related to the service.

After the direct connection procedure is completed between the ASP 1613 and the ASP 1615, a docking session is established between the WD 1611 and the peripheral 1621, at operation 1659.

Although FIG. 16 illustrates an operating procedure of each ASP in a case that an auto docking connection procedure which is implemented based on a WDC initiated approach scheme is performed in a communication system supporting a UPnP according to an embodiment of the present invention, various changes could be made to FIG. 16. For example, although shown as a series of operations, various operations in FIG. 16 could overlap, occur in parallel, occur in a different order, or occur multiple times.

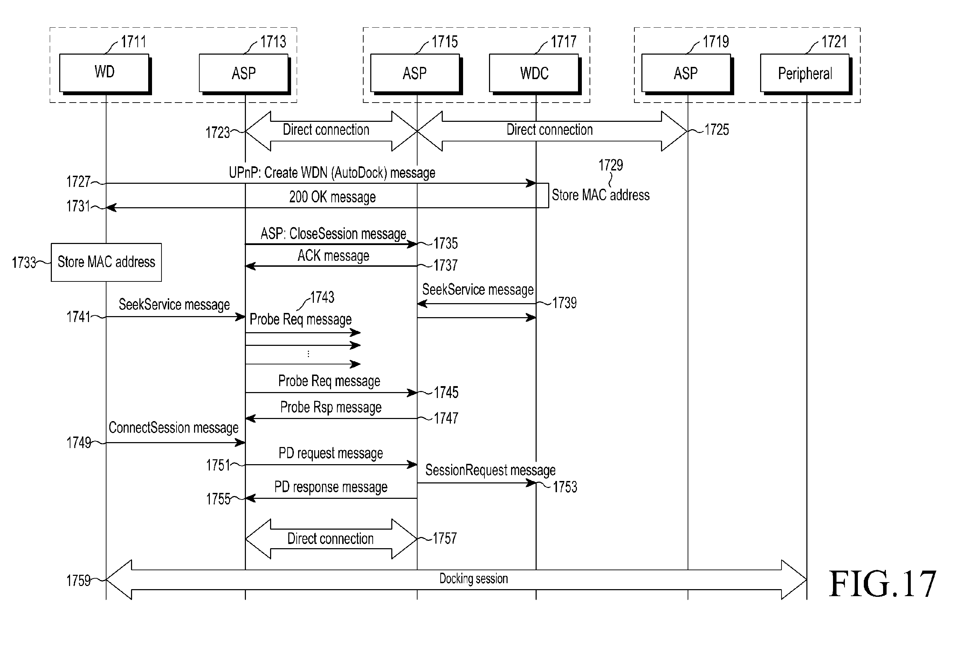

FIG. 17 is a signal processing diagram illustrating an operating procedure of each ASP in a case that an auto docking connection procedure which is implemented based on a WD initiated approach scheme is performed in a communication system supporting aUPnP according to an embodiment of the present invention.

Referring to FIG. 17, in the auto docking connection procedure which is implemented based on the WD initiated approach scheme, a WD will initiate an auto docking connection using a ConnectSession message. An ASP of the WD will transmit a PD request message including a Session Instant attribute which will carry an AutoDocking flag to represent an auto docking request, and a WDN ID will represent a particular WDN to which the WD wishes to connect. The auto docking connection procedure which is implemented based on the WD initiated approach scheme proposes to extend a session instance parameter to carry intent for the auto docking, and information on a WDN which will define the WDN which is used for a particular auto docking session. The information on the WDN may carry a participation function ID by carrying PF IDs.

Referring to FIG. 17, the communication system includes a WD 1711, an ASP 1713, an ASP 1715, a WDC 1717, an ASP 1719, and a peripheral 1721. The ASP 1713 is an ASP for the WD 1711, the ASP 1715 is an ASP for the WDC 1717, and the ASP 1719 is an ASP for the peripheral 1721.

A direct connection is established between the ASP 1713 and the ASP 1715, at operation 1723, and a direct connection is established between the ASP 1715 and the ASP 1719, at operation 1725. The WD 1711 transmits a UPnP: Create WDN (AutoDock) message which requests to create a WDN with an auto docking scheme to the WDC 1717, at operation 1727. After receiving the UPnP: Create WDN (AutoDock) message from the WD 1711, the WDC 1717 stores a MAC address of the WD 1711, at operation 1729, and transmits a 200 OK message to the WD 1711, at operation 1731. The 200 OK message includes a WDN ID.

The WD 1711 stores a WDN ID for the created WDN, and a MAC address of the WDC 1717, at operation 1733. The ASP 1713 transmits an ASP: CloseSession message which closes a session to the ASP 1715, at operation 1735. After receiving the ASP: CloseSession message from the ASP 1713, the ASP 1715 transmits an ACK message as a response message to the ASP: CloseSession message to the ASP 1713, at operation 1737.

The WD 1711 transmits a SeekService message including the following parameters to the ASP 1713, at operation 1739:
a. Org.wifi.docking.Dockee or org.wifi.docking; and
b. Mac address of Dockee.

The Org.wifi.docking.Dockee or org.wifi.docking denotes a service name, and the Mac address of Dockee denotes a MAC address of the WD 1711.

The WD 1711 transmits a SeekService message including the following parameters to the WD 1711, atoperation 1741:
a. Org.wifi.docking.WDC;
b. Mac address of WDC; and
c. Service Information Request: WDNID:WDN identifier.

The Org.wifi.docking.WDC denotes a service name, the Mac address of WDC denotes a MAC address of the WDC 1717, and the Service Information Request denotes a WDN ID of a WDN which requests service information.

The ASP 1713 continuously seeks a service of which a service name is the Org.wifi.docking.WDC through an air, at operations 1743 and 1745. That is, the ASP 1713 continuously transmits a probe request message to the ASP 1715.

If the WD 1711 and the WDC 1717 get close to each other in a Wi-Fi range, the ASP 1715 transmits a probe response message as a response message to the probe request message to the ASP 1715, at operation 1747.

After the ASP 1713 receives the probe response message from the ASP 1715, the WD 1711 transmits a ConnectSession message to the ASP 1713, at operation 1749. After receiving the ConnectSession message from the WD 1711, the ASP 1713 transmits a PD request message to the ASP 1715, at operation 1751. The PD request message includes session instance data including a WDN ID and an AutoDocking flag.

After receiving the PD request message from the ASP 1713, the ASP 1715 transmits a SessionRequest message to the WDC 1717, at operation 1753. The SessionRequest message includes a WDN ID. The ASP 1715 detects the WDN ID included in the SessionRequest message, automatically accepts a request corresponding to the PD request message, and transmits a PD response message to the ASP 1713, at operation 1755.

After the ASP 1713 receives the PD response message from the ASP 1715, a direct connection procedure is performed between the ASP 1713 and the ASP 1715, at operation 1757, the Auto_accept is set to "true," that is, a related service is in an auto-accept mode, so there will be no user interaction related to the service.

After the direct connection procedure is completed between the ASP 1713 and the ASP 1715, a docking session is established between the WD 1711 and the peripheral 1721, at operation 1759.

Although FIG. 17 illustrates an operating procedure of each ASP in a case that an auto docking connection procedure which is implemented based on a WD initiated approach scheme is performed in a communication system supporting a UPnP according to an embodiment of the present invention, various changes could be made to FIG. 17. For example, although shown as a series of operations, various operations in FIG. 17 could overlap, occur in parallel, occur in a different order, or occur multiple times.

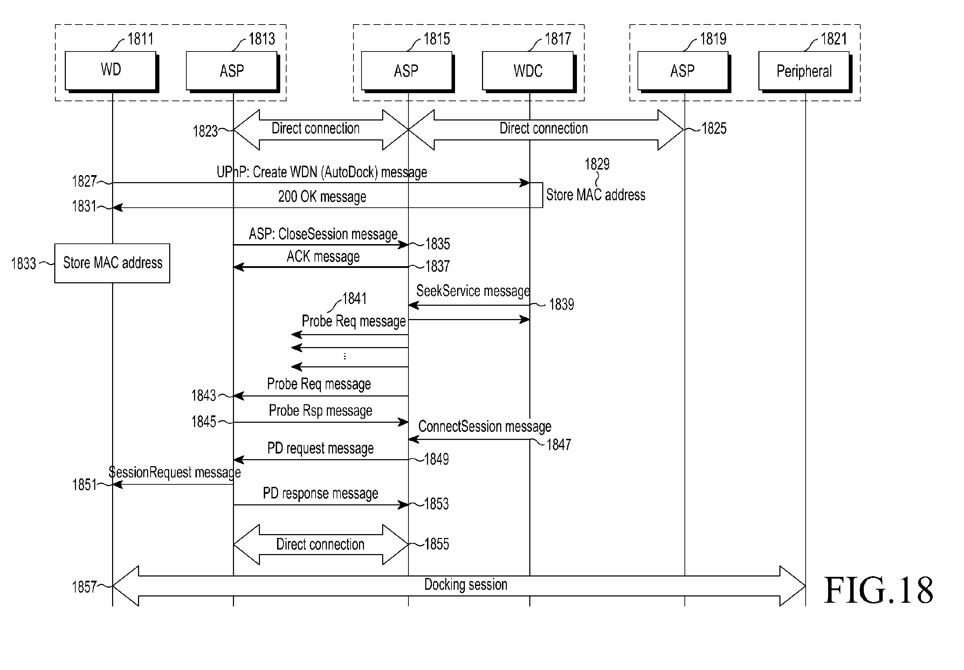

FIG. 18 is a signal processing diagram illustrating an operating procedure of each ASP in a case that an auto docking connection procedure which is implemented based on a WDC initiated approach scheme which uses a fixed connection is performed in a communication system supporting a UPnP according to an embodiment of the present invention.

Referring to FIG. 18, the auto docking connection procedure which is implemented based on the WDC initiated approach scheme which uses the fixed connection is similar to an auto docking connection procedure which is implemented based on a WDC initiated approach scheme. The docking connection procedure which is implemented based on the WDC initiated approach scheme which uses the fixed connection proposes a persistent group for an auto docking connection, so connection time will be fast.

The docking connection procedure which is implemented based on the WDC initiated approach scheme which uses the fixed connection proposes to define a new flag in a ConnectSession message to instruct an ASP to use the persistent group. This requests the ASP to use the persistent group.

In the docking connection procedure which is implemented based on the WDC initiated approach scheme which uses the fixed connection in FIG. 18, the WDC uses the fixed connection, however, it will be understood by those of ordinary skill in the art that a WD may use a connection request with a persistent group usage for the auto docking.

Referring to FIG. 18, the communication system includes a WD 1811, an ASP 1813, an ASP 1815, a WDC 1817, an ASP 1819, and a peripheral 1821. The ASP 1813 is an ASP for the WD 1811, the ASP 1815 is an ASP for the WDC 1817, and the ASP 1819 is an ASP for the peripheral 1821.

A direct connection is established between the ASP 1813 and the ASP 1815, at operation 1823, and a direct connection is established between the ASP 1815 and the ASP 1819, at operation 1825. The WD 1811 transmits a UPnP: Create WDN (AutoDock) message which requests to create a WDN with an auto docking scheme to the WDC 1817, at operation 1827. After receiving the UPnP: Create WDN (AutoDock) message from the WD 1811, the WDC 1817 stores a MAC address of the WD 1811, at operation 1829, and transmits a 200 OK message to the WD 1811, at operation 1831. The 200 OK message includes a WDN ID.

The WD 1811 stores a WDN ID for the created WDN, and a MAC address of the WDC 1817, at operation 1833. The ASP 1813 transmits an ASP: CloseSession message which closes a session to the ASP 1815, at operation 1835. After receiving the ASP: CloseSession message from the ASP 1813, the ASP 1815 transmits an ACK message as a response message to the ASP: CloseSession message to the ASP 1813, at operation 1837.

The WD 1811 transmits a SeekService message including the following parameters to the ASP 1813, at operation 1839
a. Org.wifi.docking.Dockee or org.wifi.docking; and
b. Mac address of Dockee.

The Org.wifi.docking.Dockee or org.wifi.docking denotes a service name, and the Mac address of Dockee denotes a MAC address of the WD 1811.

The ASP 1815 continuously seeks a service of which a service name is the Org.wifi.docking.WDC through air, at operations 1841 and 1843. That is, the ASP 1815 continuously transmits a probe request message to the ASP 1813. If the WD 1811 and the WDC 1817 get close to each other in a Wi-Fi range, the ASP 1813 transmits a probe response message as a response message to the probe request message to the ASP 1815, at operation 1845.

After the ASP 1815 receives the probe response message from the ASP 1813, the WDC 1817 transmits a ConnectSession message to the ASP 1815, at operation 1847. The ConnectSession message includes session instance information, and an UsePersistentGroup flag. The UsePersistentGroup flag denotes a flag indicating whether a persistent group is used.

After receiving the ConnectSession message from the WDC 1817, the ASP 1815 transmits a PD request message to the ASP 1813, at operation 1849. The PD request message includes session instance data including a WDN ID and persistent group information.

After receiving the PD request message from the ASP 1815, the ASP 1813 transmits a SessionRequest message to the WD 1811, at operation 1851. The SessionRequest message includes a WDN ID. The ASP 1813 detects the WDN ID included in the SessionRequest message, automatically accepts a request corresponding to the PD request message, and transmits a PD response message to the ASP 1815, at operation 1853. Alternatively, the WD 1811 may transmit a ConfirmSession message without an User interaction.

After the ASP 1815 receives the PD response message from the ASP 1813, a direct connection procedure is performed between the ASP 1813 and the ASP 1815, at operation 1855, the Auto_accept is set to "true," that is, a related service is in an auto-accept mode, so there will be no user interaction related to the service.

After the direct connection procedure is completed between the ASP 1813 and the ASP 1815, a docking session is established between the WD 1811 and the peripheral 1821, at operation 1857.

Although FIG. 18 illustrates an operating procedure of each ASP in a case that an auto docking connection procedure which is implemented based on a WDC initiated approach scheme which uses a fixed connection is performed in a communication system supporting a UPnP according to an embodiment of the present invention, various changes could be made to FIG. 18. For example, although shown as a series of operations, various operations in FIG. 18 could overlap, occur in parallel, occur in a different order, or occur multiple times.

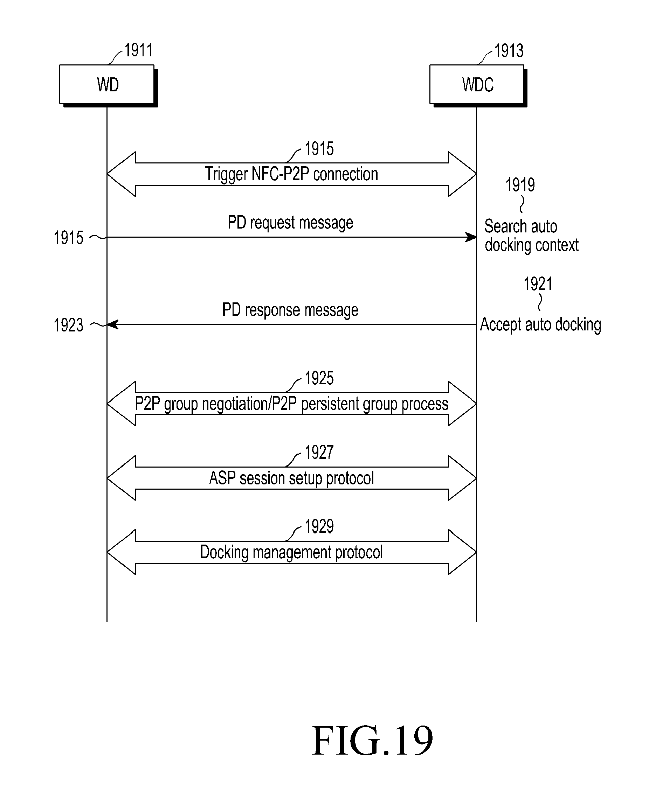

FIG. 19 is a signal processing diagram illustrating an operating procedure of each ASP in a case that an auto docking connection procedure which is implemented based on an NFC scheme is performed in a communication system supporting a UPnP according to an embodiment of the present invention.

Referring to FIG. 19, the auto docking connection procedure which is implemented based on the NFC scheme is auto docking connection procedure in which an NFC touch may be used for triggering an auto docking connection instead of normal device discovery procedures.

The communication system includes a WD 1911 and a WDC 1913.

The WD 1911 and the WDC 1913 use the NFC touch to connect to each other, and the NFC touch triggers an NFC-P2P connection, at operation 1915.

An ASP (not shown in FIG. 19) of the WD 1911 generates a PD request message and transmits the PD request message to the WDC 1913, at operation 1917, the ASP of the WD retrieves an auto docking context stored in a docking service, at operation 1919. The PD request message includes Session Information Data info parameters, and the Session Information Data info parameters include auto docking information. The auto docking information includes an auto docking flag, WDN IDs, and PF IDs. The docking service will trigger a ConnectSession procedure based on retrieved information from an NFC Stack layer, a ConnectSession request message will include the auto docking context, and the auto docking context will result in a PD request message.

The PD Request message carries the auto Docking information included in the Session Information Data info parameters, i.e., an auto docking flag, WDN IDs, and PF IDs.

The WDC 1913 accepts the auto docking request of the WD 1911 based on the stored information, at operation 1921. Here, the WDC 1913 accepts the auto docking request of the WD 1911 based on an auto docking or an availability of a WDN. After accepting the auto docking request of the WD 1911, the WDC 1913 transmits a PD response message as a response message to the PD request message to the WD 1911, at operation 1923.

The WD 1911 which receives the PD response message from the WDC 1913 and the WDC 1913 are connected using a WiFi direct connectivity process, at operation 1925. Here, a P2P group negotiation/P2P persistent group process is performed between the WD 1911 and the WDC 1913 using the WiFi direct connectivity process. The WiFi direct connectivity process is followed by an ASP sessions setup protocol and a docking management protocol, at operations 1927 and 1929.

Although FIG. 19 illustrates an operating procedure of each ASP in a case that an auto docking connection procedure which is implemented based on an NFC scheme is performed in a communication system supporting aUPnP according to an embodiment of the present invention, various changes could be made to FIG. 19. For example, although shown as a series of operations, various operations in FIG. 19 could overlap, occur in parallel, occur in a different order, or occur multiple times.

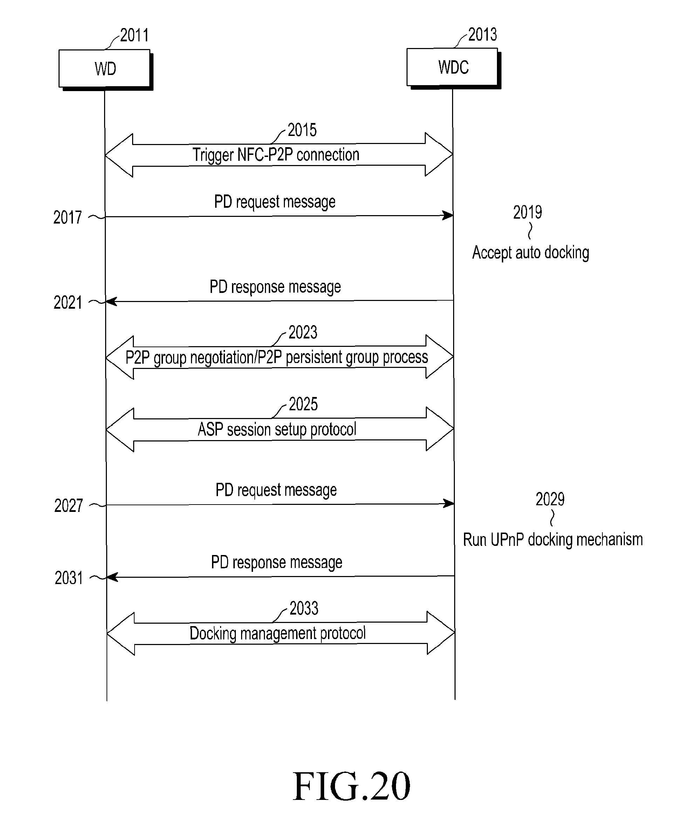

FIG. 20 is a signal processing diagram illustrating an operating procedure of each ASP in a case that an auto docking connection procedure which is implemented based on an NFC scheme without an auto docking context is performed in a communication system supporting a UPnP according to an embodiment of the present invention.

Referring to FIG. 20, the auto docking connection procedure which is implemented based on the NFC scheme without the auto docking context is auto docking connection procedure in which an NFC touch may be used for triggering an auto docking connection if there is no available docking context between a WD and a WDC.

The communication system includes a WD 2011 and a WDC 2013.

The WD 2011 and the WDC 2013 use the NFC touch to connect to each other, and the NFC touch triggers an NFC-P2P connection, at operation 2015.

An ASP (not shown in FIG. 20) of the WD 2011 generates a PD request message and transmits the PD request message to the WDC 2013, at operation 2017. It will be noted that a docking service will trigger a ConnectSession process based on retrieved information from an NFC Stack layer which will result in a PD Request.

The PD Request message carries auto docking information in Session Information Data info parameters. Here, the Session Information Data info parameters includes an auto docking flag which is set to "false," WDN IDs = NULL, and PF IDs= NULL.

The WDC 2013 accepts the auto docking request of the WD 2011 based on the stored information, at operation 2019. Here, the WDC 2013 accepts the auto docking request of the WD 2011 based on an auto docking or an availability of a WDN. All PD values are set to NULL values in the PD Request message, so the WDC 2013 will ask the WD 2011 to initialize a service discovery. After accepting the auto docking request of the WD 2011, the WDC 2013 transmits a PD response message as a response message to the PD request message to the WD 2011, at operation 2021.

The WD 2011 which receives the PD response message from the WDC 2013 and the WDC 2013 perform a P2P group negotiation/P2P persistent group process using a WiFi direct connectivity process, at operation 2023. The WiFi direct connectivity process is followed by an ASP sessions setup protocol and a docking management protocol, at operations 2025 and 2033.

The WD 2011 certainly detects PF information by performing the service discovery (post association) or by using a UPnP docking mechanism before a data flow occurs. That is, the WD 2011 transmits a service discovery request message to the WDC 2013, at operation 2027. After receiving the service discovery request message from the WD 2011, the WDC 2013 runs an SD or a UPnP docking mechanism for getting peripheral information, at operation 2029. The WDC 2013 transmits a service discovery response message as a response message to the service discovery request message to the WD 2011, at operation 2031.

Although FIG. 20 illustrates an operating procedure of each ASP in a case that an auto docking connection procedure which is implemented based on an NFC scheme without an auto docking context is performed in a communication system supporting a UPnP according to an embodiment of the present invention, various changes could be made to FIG. 20. For example, although shown as a series of operations, various operations in FIG. 20 could overlap, occur in parallel, occur in a different order, or occur multiple times.

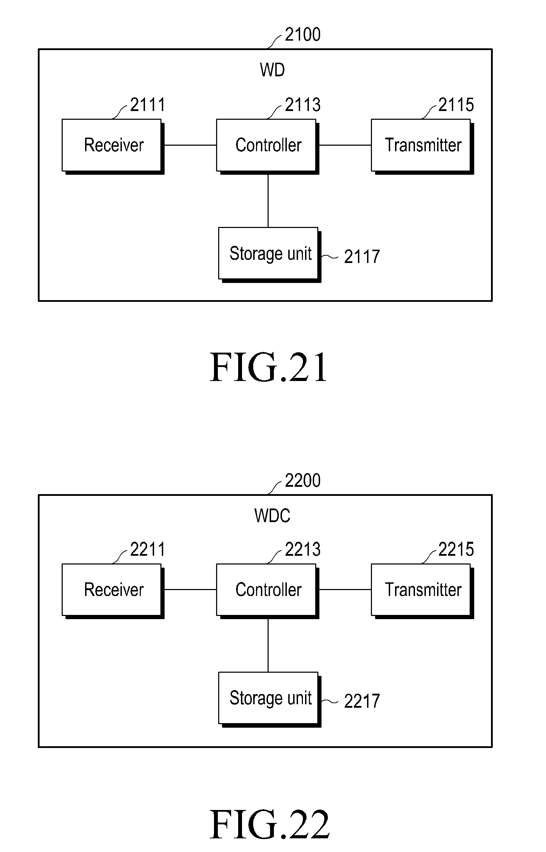

FIG. 21 is a diagram illustrating an internal structure of a WD in a communication system supporting a UPnP protocol according to an embodiment of the present invention.

Referring to FIG. 21, a WD 2100 includes a receiver 2111, a controller 2113, a transmitter 2115, and a storage unit 2117.

The controller 2113 controls the overall operation of the WD 2100. More particularly, the controller 2113 controls the WD 2100 to perform an operation related to a wireless docking operation. The operation related to the wireless docking operation is performed in the manner described with reference to FIGS. 2 to 20 and a description thereof will be omitted herein.

The receiver 2111 receives various messages, and the like from a WDC, a peripheral, and the like under a control of the controller 2113. The various messages, and the like received in the receiver 2111 have been described in FIGS. 2 to 20 and a description thereof will be omitted herein.

The transmitter 2115 transmits various messages, and the like to the WDC, the peripheral, and the like under a control of the controller 2113. The various messages, and the like transmitted in the transmitter 2115 have been described in FIGS. 2 to 20 and a description thereof will be omitted herein.

The storage unit 2117 stores the various messages, and the like received in the receiver 2111 and a program, various data, and the like necessary for the operation of the WD 2100, specially, the operation related to the wireless docking operation.

While the receiver 2111, the controller 2113, the transmitter 2115, and the storage unit 2117 are described as separate processors, it is to be understood that this is merely for convenience of description. In other words, two or more of the receiver 2111, the controller 2113, the transmitter 2115, and the storage unit 2117 may be incorporated into a single processor.

FIG. 22 is a diagram illustrating an internal structure of a WDC in a communication system supporting a UPnP protocol according to an embodiment of the present invention.

Referring to FIG. 22, a WDC 2200 includes a receiver 2211, a controller 2213, a transmitter 2215, and a storage unit 2217.

The controller 2213 controls the overall operation of the WDC 2200. More particularly, the controller 2213 controls the WDC 2200 to perform an operation related to a wireless docking operation. The operation related to the wireless docking operation is performed in the manner described with reference to FIGS. 2 to 20 and a description thereof will be omitted herein.

The receiver 2211 receives various messages, and the like from a WD, a peripheral, and the like under a control of the controller 2213. The various messages, and the like received in the receiver 2211 have been described in FIGS. 2 to 20 and a description thereof will be omitted herein.

The transmitter 2215 transmits various messages, and the like to the WD, the peripheral, and the like under a control of the controller 2213. The various messages, and the like transmitted in the transmitter 2215 have been described in FIGS. 2 to 20 and a description thereof will be omitted herein.

The storage unit 2217 stores the various messages, and the like received in the receiver 2211 and a program, various data, and the like necessary for the operation of the WDC 2200, specially, the operation related to the wireless docking operation.

While the receiver 2211, the controller 2213, the transmitter 2215, and the storage unit 2217 are described as separate processors, it is to be understood that this is merely for convenience of description. In other words, two or more of the receiver 2211, the controller 2213, the transmitter 2215, and the storage unit 2217 may be incorporated into a single processor.

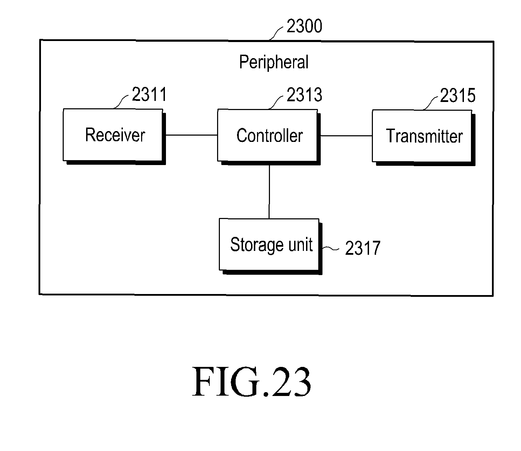

FIG. 23 is a diagram illustrating an internal structure of a peripheral in a communication system supporting aUPnP protocol according to an embodiment of the present invention.

Referring to FIG. 23, a peripheral 2300 includes a receiver 2311, a controller 2313, a transmitter 2315, and a storage unit 2317.

The controller 2313 controls the overall operation of the peripheral 2300. More particularly, the controller 2313 controls the peripheral 2300 to perform an operation related to a wireless docking operation. The operation related to the wireless docking operation is performed in the manner described with reference to FIGS. 2 to 20 and a description thereof will be omitted herein.

The receiver 2311 receives various messages, and the like from a WD, a WDC, and the like under a control of the controller 2313. The various messages, and the like received in the receiver 2311 have been described in FIGS. 2 to 20 and a description thereof will be omitted herein.

The transmitter 2315 transmits various messages, and the like to the WD, the WDC, and the like under a control of the controller 2313. The various messages, and the like transmitted in the transmitter 2315 have been described in FIGS. 2 to 20 and a description thereof will be omitted herein.

The storage unit 2317 stores the various messages, and the like received in the receiver 2311 and a program, various data, and the like necessary for the operation of the peripheral 2300, specially, the operation related to the wireless docking operation.

While the receiver 2311, the controller 2313, the transmitter 2315, and the storage unit 2317 are described as separate processors, it is to be understood that this is merely for convenience of description. In other words, two or more of the receiver 2311, the controller 2313, the transmitter 2315, and the storage unit 2317 may be incorporated into a single processor.

As is apparent from the foregoing description, an embodiment according to the present invention enables a wireless docking operation in a communication system supporting a UPnP protocol.

An embodiment according to the present invention enables a wireless docking operation thereby getting peripheral information for at least one peripheral of a WD in a communication system supporting aUPnP protocol.

An embodiment according to the present invention enables a wireless docking operation thereby getting WDN information for at least one WDN of a WD in a communication system supporting a UPnP protocol.

An embodiment according to the present invention enables a wireless docking operation thereby getting PF information for at least one peripheral of a WD which the WD will select in a communication system supporting a UPnP protocol.

An embodiment according to the present invention enables a wireless docking operation thereby getting WDN information for at least one WDN of a WD which the WD will select in a communication system supporting a UPnP protocol.

An embodiment according to the present invention enables a wireless docking operation thereby undocking all peripherals to which a WD is docked in a communication system supporting a UPnP protocol.

An embodiment according to the present invention enables a wireless docking operation thereby undocking specific peripherals among all peripherals to which a WD is docked in a communication system supporting a UPnP protocol.

An embodiment according to the present invention enables a wireless docking operation thereby knowing change for docked states for all WDs which are currently docked to a WDC in a communication system supporting a UPnP protocol.

An embodiment according to the present invention enables a wireless docking operation thereby receiving a list for peripherals which are currently docked to a WDC in a communication system supporting a UPnP protocol.

An embodiment according to the present invention enables a wireless docking operation based on an NFC scheme in a communication system supporting a UPnP protocol.

Certain aspects of the present invention may also be embodied as computer readable code on a computer readable recording medium. A computer readable recording medium is any data storage device that can store data, which can be thereafter read by a computer system. Examples of the computer readable recording medium include Read-Only Memory (ROM), Random-Access Memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

It can be appreciated that a method and apparatus according to an embodiment of the present invention may be implemented by hardware, software and/or a combination thereof. The software may be stored in a non-volatile storage, for example, an erasable or re-writable Read Only Memory (ROM), a memory, for example, a Random Access Memory (RAM, a memory chip, a memory device, or a memory Integrated Circuit (IC), or an optically or magnetically recordable non-transitory machine-readable, e.g., computer-readable, storage medium, e.g., a Compact Disk (CD), a Digital Versatile Disk (DVD), a magnetic disk, or a magnetic tape. A method and apparatus according to an embodiment of the present invention may be implemented by a computer or a mobile terminal that includes a controller and a memory, and the memory may be an example of a non-transitory machine-readable, e.g., computer-readable, storage medium suitable to store a program or programs including instructions for implementing various embodiments of the present invention.

The present invention may include a program including code for implementing the apparatus and method as defined by the appended claims, and a non-transitory machine-readable, e.g., computer-readable, storage medium storing the program. The program may be electronically transferred via any media, such as communication signals, which are transmitted through wired and/or wireless connections, and the present invention may include their equivalents.

An apparatus according to an embodiment of the present invention may receive the program from a program providing device which is connected to the apparatus via a wire or a wireless and store the program. The program providing device may include a memory for storing instructions which instruct to perform a contents protect method which has been already installed, information necessary for the contents protect method, and the like, a communication unit for performing a wired or a wireless communication with a graphic processing device, and a controller for transmitting a related program to a transmitting/receiving device based on a request of the graphic processing device or automatically transmitting the related program to the transmitting/receiving device.

While the present invention has been shown and described with reference to various embodiments thereof, it will be understood by those skilled in the art that various changes in form and details may be made therein without departing from the spirit and scope of the present invention as defined by the appended claims and their equivalents.

## Claims

1. A method for performing a wireless docking operation in a Wireless Dockee (WD) in a communication system, the method comprising:
transmitting, to a Wireless Docking Center (WDC), a get peripheral information action message requesting peripheral information for at least one peripheral of the WD; and
receiving, from the WDC, a get peripheral information action response message including the peripheral information for the at least one peripheral of the WD.

2. The method of claim 1, wherein, if the get peripheral information action message includes one peripheral IDentifier (ID), the get peripheral information action response message includes peripheral information for a peripheral corresponding to the one peripheral ID, and
wherein, if the get peripheral information action message includes more than two peripheral IDs, the get peripheral information action response message includes peripheral information for peripherals corresponding to the more than two peripheral IDs.

3. The method of claim 1, wherein the peripheral information includes Peripheral Function (PF) information including
a Medium Access Control (MAC) address and an Internet Protocol (IP) address of a related peripheral.

4. The method of claim 1, wherein the communication system supports a Universal Plug and Play (UPnP) protocol.

5. A method for performing a wireless docking operation in a Wireless Docking Center (WDC) in a communication system, the method comprising:
receiving, from a Wireless Dockee (WD), a get peripheral information action message requesting peripheral information for at least one peripheral of the WD; and
transmitting, to the WD, a get peripheral information action response message including the peripheral information for the at least one peripheral of the WD.

6. The method of claim 5, wherein, if the get peripheral information action message includes one peripheral IDentifier (ID), the get peripheral information action response message includes peripheral information for a peripheral corresponding to the one peripheral ID, and
wherein, if the get peripheral information action message includes more than two peripheral IDs, the get peripheral information action response message includes peripheral information for peripherals corresponding to the more than two peripheral IDs.

7. The method of claim 5, wherein the peripheral information includes Peripheral Function (PF) information including a Medium Access Control (MAC) address and an Internet Protocol (IP) address of a related peripheral.

8. The method of claim 5, wherein the communication system supports a Universal Plug and Play (UPnP) protocol.

9. A method for performing a wireless docking operation in a Wireless Dockee (WD) in a communication system, the method comprising:
transmitting, to a Wireless Docking Center (WDC), a get Wireless Docking Environment (WDN) information action message requesting WDN information for at least one WDN of the WD); and
receiving, from the WDC, a get WDN information action response message including the WDN information for the at least one WDN of the WD.

10. The method of claim 9, wherein, if the get WDN information action message includes one WDN IDentifier (ID), the WDN peripheral information action response message includes WDN information for a WDN corresponding to the one WDN ID, and
wherein, if the get WDN information action message includes more than two WDN IDs, the get WDN information action response message includes WDN information for WDNs corresponding to the more than two WDN IDs.

11. The method of claim 9, wherein the communication system supports a Universal Plug and Play (UPnP) protocol.

12. A method for performing a wireless docking operation in a Wireless Docking Center (WDC) in a communication system, the method comprising:
receiving, from a Wireless Dockee (WD), a get Wireless Docking Environment (WDN) information action message requesting WDN information for at least one WDN of the WD); and
transmitting, to the WD, a get WDN information action response message including the WDN information for the at least one WDN of the WD.

13. The method of claim 12, wherein, if the get WDN information action message includes one WDN IDentifier (ID), the WDN peripheral information action response message includes WDN information for a WDN corresponding to the one WDN ID, and
wherein, if the get WDN information action message includes more than two WDN IDs, the get WDN information action response message includes WDN information for WDNs corresponding to the more than two WDN IDs.

14. The method of claim 12, wherein the communication system supports a Universal Plug and Play (UPnP) protocol.

15. A method for performing a wireless docking operation in a Wireless Dockee (WD) in a communication system, the method comprising:
transmitting, to a Wireless Docking Center (WDC), a docking action message requesting Peripheral Function (PF) information for at least one peripheral of the WD which the WD will select; and
receiving, from the WDC, a docking action response message including the PF information for the at least one peripheral of the WD.

16. The method of claim 15, wherein the PF information includes a Medium Access Control (MAC) address and an Internet Protocol (IP) address of a related peripheral.

17. The method of claim 15, wherein the communication system supports a Universal Plug and Play (UPnP) protocol.

18. A method for performing a wireless docking operation in a Wireless Docking Center (WDC) in a communication system, the method comprising:
receiving, from a Wireless Dockee (WD), a docking action message requesting Peripheral Function (PF) information for at least one peripheral of the WD, which the WD will select; and
transmitting, to the WD, a docking action response message including the PF information for the at least one peripheral of the WD.

19. The method of claim 18, wherein the PF information includes a Medium Access Control (MAC) address and an Internet Protocol (IP) address of a related peripheral.

20. The method of claim 18, wherein the communication system supports a Universal Plug and Play (UPnP) protocol.

21. A method for performing a wireless docking operation in a Wireless Dockee (WD) in a communication system, the method comprising:
transmitting, to a Wireless Docking Center (WDC), a docking action message requesting Wireless Docking Environment (WDN) information for at least one WDN of the WD, which the WD will select; and
receiving, from the WDC, a docking action response message including the WDN information for the at least one WDN of the WD.

22. The method of claim 21, wherein the communication system supports a Universal Plug and Play (UPnP) protocol.

23. A method for performing a wireless docking operation in a Wireless Docking Center (WDC) in a communication system, the method comprising:
receiving, from a Wireless Dockee (WD), a docking action message requesting Wireless Docking Environment (WDN) information for at least one WDN of the WD, which the WD will select; and
transmitting, to the WD, a docking action response message including the WDN information for the at least one WDN of the WD to the WD.

24. The method of claim 23, wherein the communication system supports a Universal Plug and Play (UPnP) protocol.

25. A method for performing a wireless docking operation in a Wireless Dockee (WD) in a communication system, the method comprising:
transmitting, to a Wireless Docking Center (WDC), an undock action message requesting to undock the WD from) all peripherals to which the WD is docked; and
receiving, from the WDC, an undock action response message indicating that the WD has been undocked from the peripherals.

26. The method of claim 25, wherein the undock action message and the undock action response message include a docking session IDentifier (ID) of a docking session which is established between the WD and the WDC.

27. The method of claim 25, wherein the communication system supports a Universal Plug and Play (UPnP) protocol.

28. A method for performing a wireless docking operation in a Wireless Docking Center (WDC) in a communication system, the method comprising:
receiving, from a Wireless Dockee (WD), an undock action message requesting to undock the WD from all peripherals to which the WD is docked;
undocking the WD in response to the undock action message from the WD; and
transmitting, to the WD an undock action response message indicating that the WD has been undocked from the peripherals.

29. The method of claim 28, wherein the undock action message and the undock action response message include a docking session IDentifier (ID) of a docking session which is established between the WD and the WDC.

30. The method of claim 28, wherein the communication system supports a Universal Plug and Play (UPnP) protocol.

31. A method for performing a wireless docking operation in a Wireless Dockee (WD) in a communication system, the method comprising:
transmitting, to a Wireless Docking Center (WDC), an undock action message requesting to undock the WD from specific peripherals among peripherals to which the WD is docked; and
receiving, from the WDC, an undock action response message indicating that the WD has been undocked from the specific peripherals.

32. The method of claim 31, wherein the undock action message and the undock action response message include peripheral IDentifiers (IDs) of the specific peripherals.

33. The method of claim 31, wherein the communication system supports a Universal Plug and Play (UPnP) protocol.

34. A method for performing a wireless docking operation in a Wireless Docking Center (WDC) in a communication system, the method comprising:
receiving, from the Wireless Dockee (WD), an undock action message requesting to undock specific peripherals among peripherals to which the WD is docked from the WD ;
undocking the specific peripherals from the WD in response to the undock action message; and
transmitting, to the WD, an undock action response message indicating that the specific peripherals have been undocked from the WD.

35. The method of claim 34, wherein the undock action message and the undock action response message include peripheral IDentifiers (IDs) of the specific peripherals.

36. The method of claim 34, wherein the communication system supports a Universal Plug and Play (UPnP) protocol.

37. A method for performing a wireless docking operation in a Wireless Dockee (WD) in a communication system, the method comprising:
receiving, from a Wireless Docking Center (WDC), a docking state change parameter which informs of a change for docked states for all WDs that are docked to the WDC.

38. The method of claim 37, wherein the change for the docked states for all the WDs includes a state in which at least one of the WDs is undocked from the WDC.

39. The method of claim 37, wherein the communication system supports a Universal Plug and Play (UPnP) protocol.

40. A method for performing a wireless docking operation in a Wireless Docking Center (WDC) in a communication system, the method comprising:
transmitting, to a Wireless Dockee (WD), a docking state change parameter which informs of a change for docked states for all of WDs which are docked to the WDC.

41. The method of claim 40, wherein the change for the docked states for all of the WDs includes a state in which at least one of all of the WDs is undocked from the WDC.

42. The method of claim 40, wherein the communication system supports a Universal Plug and Play (UPnP) protocol.

43. A method for performing a wireless docking operation in a Wireless Dockee (WD) in a communication system, the method comprising:
receiving, from a Wireless Docking Center (WDC), a list of peripherals which are currently docked to the WDC.

44. The method of claim 43, wherein the communication system supports a Universal Plug and Play (UPnP) protocol.

45. A method for performing a wireless docking operation in a Wireless Docking Center (WDC) in a communication system, the method comprising:
transmitting, to a Wireless Dockee (WD), a list of peripherals which are currently docked to the WDC.

46. The method of claim 45, wherein the communication system supports a Universal Plug and Play (UPnP) protocol.

47. A method for performing a wireless docking operation in a Wireless Dockee (WD) in a communication system, the method comprising:
connecting to a Wireless Docking Center (WDC) using a Near Field Communication (NFC) scheme;
triggering an NFC-Peer to Peer (P2P) connection; and
performing an auto docking process with the WDC, after triggering the NFC-P2P connection.

48. The method of claim 47, further comprising:
performing one of a P2P group negotiation and P2P persistent group process with the WDC after performing the auto docking process with the WDC.

49. The method of claim 48, further comprising:
performing a process which follows Application Service Platform (ASP) sessions setup protocol and a docking management protocol with the WDC after performing the one of P2P group negotiation and P2P persistent group process.

50. A method for performing a wireless docking operation in a Wireless Docking Center (WDC) in a communication system, the method comprising:
connecting to a Wireless Dockee (WD) using a Near Field Communication (NFC) scheme;
triggering a NFC-Peer to Peer (P2P) connection; and
performing an auto docking process with the WD, after triggering the NFC-P2P connection.

51. The method of claim 50, further comprising:
performing one of a P2P group negotiation and P2P persistent group process with the WD after performing the auto docking process with the WD.

52. The method of claim 51, further comprising:
performing a process which follows Application Service Platform (ASP) sessions setup protocol and a docking management protocol with the WD after performing the one of P2P group negotiation and P2P persistent group process.

53. A Wireless Dockee (WD) configured to perform the method of one of claims 1 to 4, 9-11, 15-17, 21-22, 25-27, 31-33, 37-39, 43-44, and 47-49.

54. A Wireless Docking Center (WDC) configured to perform the method of one of claims 5-8, 12-14, 18-20, 23-24, 28-30, 34-36, 40-42, 45-46, and 50-52.
